(19) Europäisches Patentamt
European Patent Office
Office européen des brevets

(11) EP 2 812 382 B1

(12) # EUROPEAN PATENT SPECIFICATION

(45) Date of publication and mention of the grant of the patent:
**11.07.2018 Bulletin 2018/28**

(21) Application number: **13746940.9**

(22) Date of filing: **28.01.2013**

(51) Int Cl.:
***C08J 5/18*** *(2006.01)*
***C08L 67/04*** *(2006.01)*
***C08K 3/00*** *(2018.01)*
***B29D 7/01*** *(2006.01)*
***C08L 23/02*** *(2006.01)*

(86) International application number:
**PCT/IB2013/050732**

(87) International publication number:
**WO 2013/118022 (15.08.2013 Gazette 2013/33)**

(54) **BREATHABLE FILM FORMED FROM A RENEWABLE POLYESTER**

ATMUNGSAKTIVE FOLIE AUS ERNEUERBAREM POLYESTER

FILM RESPIRANT FORMÉ À PARTIR D'UN POLYESTER RENOUVELABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2012 US 201213370943**

(43) Date of publication of application:
**17.12.2014 Bulletin 2014/51**

(73) Proprietor: **Kimberly-Clark Worldwide, Inc.**
**Neenah, Wisconsin 54956 (US)**

(72) Inventors:
- **TOPOLKARAEV, Vasily, A.**
  **Appleton, Wisconsin 54915 (US)**
- **MCENEANY, Ryan, J.**
  **Appleton, Wisconsin 54915 (US)**
- **SCHOLL, Neil, T.**
  **Neenah, Wisconsin 54956 (US)**
- **EBY, Tom**
  **Greenville, Wisconsin 54942 (US)**

(74) Representative: **Dehns**
**St. Brides House**
**10 Salisbury Square**
**London EC4Y 8JD (GB)**

(56) References cited:
**WO-A2-02/053376**
**WO-A2-02/085969**
**JP-A- 2007 320 239**
**JP-A- 2010 280 921**
**US-A1- 2003 015 826**
**US-A1- 2003 162 013**
**US-A1- 2003 162 013**
**US-A1- 2005 112 363**
**US-A1- 2010 068 484**
**US-A1- 2010 068 484**
**US-A1- 2011 152 815**
**US-A1- 2011 152 815**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 812 382 B1

## Description

### Background of the Invention

Disposable absorbent products (e.g., diapers, feminine hygiene products, incontinence products, etc.) are subjected to one or more liquid insults, such as of water, urine, menses, or blood, during use. Many commercially available diapers allow water vapor to pass through the diaper and into the environment to lessen the amount of moisture held against the skin and reduce the chance of skin irritation and rash due to skin overhydration. To allow the passage of vapor through the diaper and into the environment while holding liquid, a "breathable" outer cover is often employed that is formed from a nonwoven web laminated to a film. Conventional films employ filler particles that cause a series of micropores to develop in the film when stretched. Examples of such filler particles include inorganic particles, such as calcium carbonate, clay, titanium dioxide, diatomaceous earth, and other similar particles. To achieve the desired breathability, such films will usually contain from about 45% to about 65% of filler particles. The micropores that are created by the filler particles form what is often referred to as "tortuous pathways" through the film. Liquid contacting one side of the film does not have a direct passage through the film. Instead, a network of microporous channels in the film prevents liquids from passing, but allows gases and water vapor to pass.

One shortcoming with such microporous films is that they are generally formed from polyolefins (e.g., LLDPE), which are not renewable. Unfortunately, the use of renewable polymers in such films is problematic due to the difficulty involved with thermally processing such polymers. Renewable polyesters, for example, have a relatively high glass transition temperature and typically demonstrate a very high stiffness and tensile modulus, while having low ductility/elongations at break. As an example, polylactic acid has a glass transition temperature of about 59°C and a tensile modulus of about 2 GPa or more. Nevertheless, the tensile elongation (at break) for PLA materials is only about 5%. Such a high modulus and low elongation significantly limits the use of such polymers in films, where a good balance between material stiffness and elongation is required. In addition to these problems, polylactic acid, for example, is also too rigid for quiet flexible film applications and tends to have performance issues during use, such as causing noisy rustles for adult feminine products.

US 2005/122363, WO2002/085969, US2011/152815, US2003/162013 and US2010/068484 disclose biodegradable breathable films comprising a biodegradable polymer.

JP2010/280921 discloses a white film comprising polylactic acid and a polyolefin resin.

JP2007/320239 discloses a biaxially stretched film having practically sufficient reflectivity in a visible light region.

As such, a need currently exists for a breathable film that can be formed from a renewable polyester composition and yet is still capable of exhibiting good mechanical properties.

### Summary of the Invention

In accordance with one embodiment of the present invention, a breathable film is disclosed that has a water vapor transmission rate of 500 $g/m^2/24$ hours or more. The film comprises a thermoplastic composition that includes at least one rigid renewable polyester having a glass transition temperature of 0°C or more; at least one polymeric toughening additive which includes a polyolefin; at least one interphase modifier, wherein the interphase modifier is a silicone, silicone-polyether copolymer, aliphatic polyester, aromatic polyester, alkylene glycol, alkane diol, amine oxide, fatty acid ester, or a combination thereof; and at least one polyepoxide compatibilizer containing, on average, at least two oxirane rings per molecule. The thermoplastic composition has a morphology in which a plurality of discrete primary domains and voids are dispersed within a continuous phase, the domains containing the polymeric toughening additive and the continuous phase containing the renewable polyester. The average percent volume of the composition that is occupied by the voids is from 20% to 80% per cubic centimeter.

In accordance with another embodiment of the present invention, an absorbent article is disclosed that comprises a generally liquid-impermeable, breathable film that comprises a thermoplastic composition as described herein.

In accordance with yet another embodiment of the present invention, a method for forming a breathable film is disclosed. The method comprises forming a blend that contains a rigid renewable polyester; a polymeric toughening additive which includes a polyolefin; at least one interphase modifier, wherein the interphase modifier is a silicone, silicone-polyether copolymer, aliphatic polyester, aromatic polyester, alkylene glycol, alkane diol, amine oxide, fatty acid ester, or a combination thereof; and at least one polyepoxide compatibilizer, containing, on average, at least two oxirane rings per molecule; wherein the rigid renewable polyester has a glass transition temperature of 0°C or more; extruding the blend onto a surface to form a precursor film material; and stretching the precursor film material at a temperature that is lower than the glass transition temperature of the renewable polyester to form a breathable film that contains a plurality of voids.

Other features and aspects of the present invention are discussed in greater detail below.

## Brief Description of the Drawings

A full and enabling disclosure of the present invention, including the best mode thereof, directed to one of ordinary skill in the art, is set forth more particularly in the remainder of the specification, which makes reference to the appended figures in which:

Fig. 1 is a schematic illustration of one embodiment of forming the film of the present invention;
Fig. 2 is an SEM photomicrograph of a sample of Example 2 before cold drawing; and
Fig. 3 is an SEM photomicrograph of a sample of Example 2 after cold drawing.

Repeat use of references characters in the present specification and drawings is intended to represent same or analogous features or elements of the invention.

## Detailed Description of Representative Embodiments

Reference now will be made in detail to various embodiments of the invention, one or more examples of which are set forth below. Each example is provided by way of explanation of the invention, not limitation of the invention. In fact, it will be apparent to those skilled in the art that various modifications and variations may be made in the present invention without departing from the scope of the invention. For instance, features illustrated or described as part of one embodiment, may be used on another embodiment to yield a still further embodiment.

Generally speaking, the present invention is directed to a breathable film formed from a thermoplastic composition that contains a rigid renewable polyester and has a voided structure. To achieve such a structure, a thermoplastic composition that contains a renewable polyester and polymeric toughening additive is extruded onto a surface to form a precursor film in which the toughening additive can be dispersed as discrete physical domains within a continuous matrix of the renewable polyester. The precursor film is thereafter stretched or drawn at a temperature below the glass transition temperature of the polyester (i.e., "cold drawn"). Without intending to be limited by theory, the present inventors believe that the deformation force and elongational strain of the drawing process causes debonding to occur in the renewable polyester matrix at those areas located adjacent to the discrete domains. This creates a network of voids located adjacent to the discrete domains.

The average percent volume occupied by the voids within a given unit volume of the thermoplastic composition is from 20% to 80% per $cm^3$, in some embodiments from 30% to 70%, and in some embodiments, from 40% to 60% per cubic centimeter of the composition. Such a high void volume can significantly increase the water vapor transmission rate ("WVTR") of the film, which is the rate at which water vapor permeates through a material as measured in units of grams per meter squared per 24 hours ($g/m^2/24$ hrs). Thus, the film exhibits a WVTR of 500 grams/$m^2$-24 hours or more, in some embodiments about 1,000 grams/$m^2$-24 hours or more, in some embodiments 2,000 grams/$m^2$-24 hours or more, and in some embodiments, from about 3,000 to about 15,000 grams/$m^2$-24 hours. The high void volume can also lower the density of the film. For example, the film may have a density of 1.4 grams per cubic centimeter ("$g/cm^3$") or less, in some embodiments about 1.1 $g/cm^3$ or less, in some embodiments from about 0.4 $g/cm^3$ to about 1.0 $g/cm^3$, and in some embodiments, from about 0.5 $g/cm^3$ to about 0.95 $g/cm^3$.

Various embodiments of the present invention will now be described in more detail.

### I. Thermoplastic Composition

#### A. Renewable Polyester

Renewable polyesters typically constitute from about 70 wt.% to about 99 wt.%, in some embodiments from about 75 wt.% to about 98 wt.%, and in some embodiments, from about 80 wt.% to about 95 wt.% of the thermoplastic composition. Any of a variety of renewable polyesters may generally be employed in the thermoplastic composition, such as aliphatic polyesters, such as polycaprolactone, polyesteramides, polylactic acid (PLA) and its copolymers, polyglycolic acid, polyalkylene carbonates (e.g., polyethylene carbonate), poly-3-hydroxybutyrate (PHB), poly-3-hydroxyvalerate (PHV), poly-3-hydroxybutyrate-co-4-hydroybutyrate, poly-3-hydroxybutyrate-co-3-hydroxyvalerate copolymers (PHBV), poly-3-hydroxybutyrate-co-3-hydroxyhexanoate, poly-3-hydroxybutyrate-co-3-hydroxyoctanoate, poly-3-hydroxybutyrate-co-3-hydroxydecanoate, poly-3-hydroxybutyrate-co-3-hydroxyoctadecanoate, and succinate-based aliphatic polymers (e.g., polybutylene succinate, polybutylene succinate adipate, polyethylene succinate, etc.); aliphatic-aromatic copolyesters (e.g., polybutylene adipate terephthalate, polyethylene adipate terephthalate, polyethylene adipate isophthalate, polybutylene adipate isophthalate, etc.); aromatic polyesters (e.g., polyethylene terephthalate, polybutylene terephthalate, etc.); and so forth.

The thermoplastic composition contains at least one renewable polyester that is rigid in nature and thus has a

relatively high glass transition temperature. Thus, the glass transition temperature ("$T_g$") is 0°C or more, in some embodiments from 5°C to 100°C, in some embodiments from about 30°C to about 80°C, and in some embodiments, from 50°C to 75°C. The renewable polyester may also have a melting temperature of from about 140°C to about 260°C, in some embodiments from about 150°C to about 250°C, and in some embodiments, from about 160°C to about 220°C. The melting temperature may be determined using differential scanning calorimetry ("DSC") in accordance with ASTM D-3417. The glass transition temperature may be determined by dynamic mechanical analysis in accordance with ASTM E1640-09.

One particularly suitable rigid polyester is polylactic acid, which may generally be derived from monomer units of any isomer of lactic acid, such as levorotory-lactic acid ("L-lactic acid"), dextrorotatory-lactic acid ("D-lactic acid"), meso-lactic acid, or mixtures thereof. Monomer units may also be formed from anhydrides of any isomer of lactic acid, including L-lactide, D-lactide, meso-lactide, or mixtures thereof. Cyclic dimers of such lactic acids and/or lactides may also be employed. Any known polymerization method, such as polycondensation or ring-opening polymerization, may be used to polymerize lactic acid. A small amount of a chain-extending agent (e.g., a diisocyanate compound, an epoxy compound or an acid anhydride) may also be employed. The polylactic acid may be a homopolymer or a copolymer, such as one that contains monomer units derived from L-lactic acid and monomer units derived from D-lactic acid. Although not required, the rate of content of one of the monomer unit derived from L-lactic acid and the monomer unit derived from D-lactic acid is preferably about 85 mole% or more, in some embodiments about 90 mole% or more, and in some embodiments, about 95 mole% or more. Multiple polylactic acids, each having a different ratio between the monomer unit derived from L-lactic acid and the monomer unit derived from D-lactic acid, may be blended at an arbitrary percentage. Of course, polylactic acid may also be blended with other types of polymers (e.g., polyolefins, polyesters, etc.).

In one particular embodiment, the polylactic acid has the following general structure:

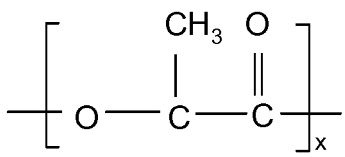

One specific example of a suitable polylactic acid polymer that may be used in the present invention is commercially available from Biomer, Inc. of Krailling, Germany) under the name BIOMER™ L9000. Other suitable polylactic acid polymers are commercially available from Natureworks LLC of Minnetonka, Minnesota (NATUREWORKS®) or Mitsui Chemical (LACEA™). Still other suitable polylactic acids may be described in U.S. Patent Nos. 4,797,468; 5,470,944; 5,770,682; 5,821,327; 5,880,254; and 6,326,458.

The polylactic acid typically has a number average molecular weight ("$M_n$") ranging from about 40,000 to about 160,000 grams per mole, in some embodiments from about 50,000 to about 140,000 grams per mole, and in some embodiments, from about 80,000 to about 120,000 grams per mole. Likewise, the polymer also typically has a weight average molecular weight ("$M_w$") ranging from about 80,000 to about 200,000 grams per mole, in some embodiments from about 100,000 to about 180,000 grams per mole, and in some embodiments, from about 110,000 to about 160,000 grams per mole. The ratio of the weight average molecular weight to the number average molecular weight ("$M_w/M_n$"), i.e., the "polydispersity index", is also relatively low. For example, the polydispersity index typically ranges from about 1.0 to about 3.0, in some embodiments from about 1.1 to about 2.0, and in some embodiments, from about 1.2 to about 1.8. The weight and number average molecular weights may be determined by methods known to those skilled in the art.

The polylactic acid may also have an apparent viscosity of from about 50 to about 600 Pascal seconds (Pa·s), in some embodiments from about 100 to about 500 Pa·s, and in some embodiments, from about 200 to about 400 Pa·s, as determined at a temperature of 190°C and a shear rate of 1000 $sec^{-1}$. The melt flow rate of the polylactic acid (on a dry basis) may also range from about 0.1 to about 40 grams per 10 minutes, in some embodiments from about 0.5 to about 20 grams per 10 minutes, and in some embodiments, from about 5 to about 15 grams per 10 minutes, determined at a load of 2160 grams and at 190°C.

Some types of neat polyesters (e.g., polylactic acid) can absorb water from the ambient environment such that it has a moisture content of about 500 to 600 parts per million ("ppm"), or even greater, based on the dry weight of the starting polylactic acid. Moisture content may be determined in a variety of ways as is known in the art, such as in accordance with ASTM D 7191-05, such as described below. Because the presence of water during melt processing can hydrolytically degrade the polyester and reduce its molecular weight, it is sometimes desired to dry the polyester prior to blending. In most embodiments, for example, it is desired that the renewable polyester have a moisture content of about 300 parts per million ("ppm") or less, in some embodiments about 200 ppm or less, in some embodiments from about 1 to about 100 ppm prior to blending with the toughening additive. Drying of the polyester may occur, for instance, at a temperature of from about 50°C to about 100°C, and in some embodiments, from about 70°C to about 80°C.

B. Polymeric Toughening Additive

As indicated above, the thermoplastic composition of the present invention also contains a polymeric toughening additive. Due to its polymeric nature, the toughening additive possesses a relatively high molecular weight that can help improve the melt strength and stability of the thermoplastic composition. Although not required, the polymeric toughening additive may be generally immiscible with the renewable polyester. In this manner, the toughening additive can better become dispersed as discrete phase domains within a continuous phase of the renewable polyester. The discrete domains are capable of absorbing energy that arises from an external force, which increases the overall toughness and strength of the resulting material. The domains may have a variety of different shapes, such as elliptical, spherical, cylindrical, etc. In one embodiment, for example, the domains have a substantially elliptical shape. The physical dimension of an individual domain is typically small enough to minimize the propagation of cracks through the polymer material upon the application of an external stress, but large enough to initiate microscopic plastic deformation and allow for shear zones at and around particle inclusions.

While the polymers may be immiscible, the toughening additive may nevertheless be selected to have a solubility parameter that is relatively similar to that of the renewable polyester. This can improve the interfacial compatibility and physical interaction of the boundaries of the discrete and continuous phases, and thus reduces the likelihood that the composition will fracture. In this regard, the ratio of the solubility parameter for the renewable polyester to that of the toughening additive is typically from 0.5 to 1.5, and in some embodiments, from about 0.8 to about 1.2. For example, the polymeric toughening additive may have a solubility parameter of from about 15 to about 30 $MJoules^{1/2}/m^{3/2}$, and in some embodiments, from about 18 to about 22 $MJoules^{1/2}/m^{3/2}$, while polylactic acid may have a solubility parameter of about 20.5 $MJoules^{1/2}/m^{3/2}$. The term "solubility parameter" as used herein refers to the "Hildebrand Solubility Parameter", which is the square root of the cohesive energy density and calculated according to the following equation:

$$\delta = \sqrt{((\Delta H_v - RT)/V_m)}$$

where:

*Δ Hv = heat of vaporization*
*R = Ideal Gas constant*
*T = Temperature*
*Vm = Molecular Volume*

The Hildebrand solubility parameters for many polymers are also available from the Solubility Handbook of Plastics, by Wyeych (2004).

The polymeric toughening additive may also have a certain melt flow rate (or viscosity) to ensure that the discrete domains and resulting voids can be adequately maintained. For example, if the melt flow rate of the toughening additive is too high, it tends to flow and disperse uncontrollably through the continuous phase. This results in lamellar or plate-like domains that are difficult to maintain and also likely to prematurely fracture. Conversely, if the melt flow rate of the toughening additive is too low, it tends to clump together and form very large elliptical domains, which are difficult to disperse during blending. This may cause uneven distribution of the toughening additive through the entirety of the continuous phase. In this regard, the present inventors have discovered that the ratio of the melt flow rate of the toughening additive to the melt flow rate of the renewable polyester is typically from 0.2 to 8, in some embodiments from about 0.5 to about 6, and in some embodiments, from about 1 to about 5. The polymeric toughening additive may, for example, have a melt flow rate of from about 0.1 to about 250 grams per 10 minutes, in some embodiments from about 0.5 to about 200 grams per 10 minutes, and in some embodiments, from about 5 to about 150 grams per 10 minutes, determined at a load of 2160 grams and at 190°C.

In addition to the properties noted above, the mechanical characteristics of the polymeric toughening additive may also be selected to achieve the desired increase in toughness. For example, when a blend of the renewable polyester and toughening additive is applied with an external force, shear and/or plastic yielding zones may be initiated at and around the discrete phase domains as a result of stress concentrations that arise from a difference in the elastic modulus of the toughening additive and renewable polyester. Larger stress concentrations promote more intensive localized plastic flow at the domains, which allows them to become significantly elongated when stresses are imparted. These elongated domains allow the composition to exhibit a more pliable and softer behavior than the otherwise rigid polyester resin. To enhance the stress concentrations, the toughening additive is selected to have a relatively low Young's modulus of elasticity in comparison to the renewable polyester. For example, the ratio of the modulus of elasticity of the renewable polyester to that of the toughening additive is typically from about 1 to about 250, in some embodiments from about 2

to about 100, and in some embodiments, from about 2 to about 50. The modulus of elasticity of the toughening additive may, for instance, range from about 2 to about 500 Megapascals (MPa), in some embodiments from about 5 to about 300 MPa, and in some embodiments, from about 10 to about 200 MPa. To the contrary, the modulus of elasticity of polylactic acid is typically from about 800 MPa to about 2000 MPa.

To impart the desired increase in toughness, the polymeric toughening additive may also exhibit an elongation at break (i.e., the percent elongation of the polymer at its yield point) greater than the renewable polyester. For example, the polymeric toughening additive of the present invention may exhibit an elongation at break of about 50% or more, in some embodiments about 100% or more, in some embodiments from about 100% to about 2000%, and in some embodiments, from about 250% to about 1500%.

The polymeric additive includes a polyolefin (e.g., polyethylene, polypropylene, polybutylene, etc.) Suitable polyolefins may, for instance, include ethylene polymers (e.g., low density polyethylene ("LDPE"), high density polyethylene ("HDPE"), linear low density polyethylene ("LLDPE"), etc.), propylene homopolymers (e.g., syndiotactic, atactic, isotactic, etc.), propylene copolymers, and so forth.

In one particular embodiment, the polymer is a propylene polymer, such as homopolypropylene or a copolymer of propylene. The propylene polymer may, for instance, be formed from a substantially isotactic polypropylene homopolymer or a copolymer containing equal to or less than about 10 wt.% of other monomer, i.e., at least about 90% by weight propylene. Such homopolymers may have a melting point of from about 160°C to about 170°C.

In still another embodiment, the polyolefin may be a copolymer of ethylene or propylene with another α-olefin, such as a $C_3$-$C_{20}$ α-olefin or $C_3$-$C_{12}$ α-olefin. Specific examples of suitable α-olefins include 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. Particularly desired α-olefin comonomers are 1-butene, 1-hexene and 1-octene. The ethylene or propylene content of such copolymers may be from about 60 mole% to about 99 mole%, in some embodiments from about 80 mole% to about 98.5 mole%, and in some embodiments, from about 87 mole% to about 97.5 mole%. The α-olefin content may likewise range from about 1 mole% to about 40 mole%, in some embodiments from about 1.5 mole% to about 15 mole%, and in some embodiments, from about 2.5 mole% to about 13 mole%.

Exemplary olefin copolymers for use in the present invention include ethylene-based copolymers available under the designation EXACT™ from ExxonMobil Chemical Company of Houston, Texas. Other suitable ethylene copolymers are available under the designation ENGAGE™, AFFINITY™, DOWLEX™ (LLDPE) and ATTANE™ (ULDPE) from Dow Chemical Company of Midland, Michigan. Other suitable ethylene polymers are described in U.S. Patent Nos. 4,937,299 to Ewen et al.; 5,218,071 to Tsutsui et al.; 5,272,236 to Lai, et al.; and 5,278,272 to Lai, et al. Suitable propylene copolymers are also commercially available under the designations VISTAMAXX™ from ExxonMobil Chemical Co. of Houston, Texas; FINA™ (e.g., 8573) from Atofina Chemicals of Feluy, Belgium; TAFMER™ available from Mitsui Petrochemical Industries; and VERSIFY™ available from Dow Chemical Co. of Midland, Michigan. Other examples of suitable propylene polymers are described in U.S. Patent Nos. 6,500,563 to Datta, et al.; 5,539,056 to Yang, et al.; and 5,596,052 to Resconi, et al.

Any of a variety of known techniques may generally be employed to form the olefin copolymers. For instance, olefin polymers may be formed using a free radical or a coordination catalyst (e.g., Ziegler-Natta). Preferably, the olefin polymer is formed from a single-site coordination catalyst, such as a metallocene catalyst. Such a catalyst system produces ethylene copolymers in which the comonomer is randomly distributed within a molecular chain and uniformly distributed across the different molecular weight fractions. Metallocene-catalyzed polyolefins are described, for instance, in U.S. Patent Nos. 5,571,619 to McAlpin et al.; 5,322,728 to Davis et al.; 5,472,775 to Obijeski et al.; 5,272,236 to Lai et al.; and 6,090,325 to Wheat, et al. Examples of metallocene catalysts include bis(n-butylcyclopentadienyl)titanium dichloride, bis(n-butylcyclopentadienyl)zirconium dichloride, bis(cyclopentadienyl)scandium chloride, bis(indenyl)zirconium dichloride, bis(methylcyclopentadienyl)titanium dichloride, bis(methylcyclopentadienyl)zirconium dichloride, cobaltocene, cyclopentadienyltitanium trichloride, ferrocene, hafnocene dichloride, isopropyl(cyclopentadienyl,-1-flourenyl)zirconium dichloride, molybdocene dichloride, nickelocene, niobocene dichloride, ruthenocene, titanocene dichloride, zirconocene chloride hydride, zirconocene dichloride, and so forth. Polymers made using metallocene catalysts typically have a narrow molecular weight range. For instance, metallocene-catalyzed polymers may have polydispersity numbers ($M_w/M_n$) of below 4, controlled short chain branching distribution, and controlled isotacticity.

Regardless of the materials employed, the relative percentage of the polymeric toughening additive in the thermoplastic composition is selected to achieve the desired properties without significantly impacting the renewability of the resulting composition. For example, the toughening additive is typically employed in an amount of from 1 wt.% to 30 wt.%, in some embodiments from about 2 wt.% to about 25 wt.%, and in some embodiments, from about 5 wt.% to about 20 wt.% of the thermoplastic composition, based on the weight of the renewable polyesters employed in the composition. The concentration of the toughening additive in the entire thermoplastic composition may likewise constitute

from about 0.1 wt.% to about 30 wt.%, in some embodiments from about 0.5 wt.% to about 25 wt.%, and in some embodiments, from about 1 wt.% to about 20 wt.%.

C. Interphase Modifier

An interphase modifier is also be employed in the thermoplastic composition to reduce the degree of friction and connectivity between the toughening additive and renewable polyester, and thus enhance the degree and uniformity of debonding. In this manner, the voids can be distributed in a substantially homogeneous fashion throughout the composition. The modifier is generally in a liquid or semi-solid form at room temperature (e.g., 25°C) so that it possesses a relatively low viscosity, allowing it to be more readily incorporated into the thermoplastic composition and to easily migrate to the polymer surfaces. In this regard, the kinematic viscosity of the interphase modifier is typically from 0.7 to 200 centistokes ("cs"), in some embodiments from about 1 to about 100 cs, and in some embodiments, from about 1.5 to about 80 cs, determined at 40°C. In addition, the interphase modifier is also typically hydrophobic so that it has an affinity for the polymer toughening additive, resulting in a change in the interfacial tension between the renewable polyester and the toughening additive. By reducing physical forces at the interfaces between the polyester and the toughening additive, it is believed that the low viscosity, hydrophobic nature of the modifier can help facilitate debonding from the polyester matrix at reduced external stresses. As used herein, the term "hydrophobic" typically refers to a material having a contact angle of water in air of about 40° or more, and in some cases, about 60° or more. In contrast, the term "hydrophilic" typically refers to a material having a contact angle of water in air of less than about 40°. One suitable test for measuring the contact angle is ASTM D5725-99 (2008).

The interphase modifier is selected from silicones, silicone-polyether copolymers, aliphatic polyesters, aromatic polyesters, alkylene glycols (e.g., ethylene glycol, diethylene glycol, triethylene glycol, tetraethylene glycol, propylene glycol, polyethylene glycol, polypropylene glycol, polybutylene glycol, etc.), alkane diols (e.g., 1,3-propanediol, 2,2-dimethyl-1,3-propanediol, 1,3-butanediol, 1,4-butanediol, 1,5-pentanediol, 1,6-hexanediol, 2,2,4-trimethyl-1,6 hexanediol, 1,3-cyclohexanedimethanol, 1,4-cyclohexanedimethanol, 2,2,4,4-tetramethyl-1,3-cyclobutanediol, etc.), amine oxides (e.g., octyldimethylamine oxide), fatty acid esters, or combinations thereof. One particularly suitable interphase modifier is polyether polyol, such as commercially available under the trade name PLURIOL® WI from BASF Corp. Another suitable modifier is a partially renewable ester, such as commercially available under the trade name HALLGREEN® IM from Hallstar.

Although the actual amount may vary, the interphase modifier is typically employed in an amount of from 0.1 wt.% to 20 wt.%, in some embodiments from about 0.5 wt.% to about 15 wt.%, and in some embodiments, from about 1 wt.% to about 10 wt.% of the thermoplastic composition, based on the weight of the renewable polyesters employed in the composition. The concentration of the interphase modifier in the entire thermoplastic composition may likewise constitute from about 0.05 wt.% to about 20 wt.%, in some embodiments from about 0.1 wt.% to about 15 wt.%, and in some embodiments, from about 0.5 wt.% to about 10 wt.%.

When employed in the amounts noted above, the interphase modifier has a character that enables it to readily migrate to the interfacial surface of the polymers and facilitate debonding without disrupting the overall melt properties of the thermoplastic composition. For example, the interphase modifier does not typically have a plasticizing effect on the polymer by reducing its glass transition temperature. Quite to the contrary, the present inventors have discovered that the glass transition temperature of the thermoplastic composition may be substantially the same as the initial renewable polyester. In this regard, the ratio of the glass temperature of the composition to that of the polyester is typically from about 0.7 to about 1.3, in some embodiments from about 0.8 to about 1.2, and in some embodiments, from about 0.9 to about 1.1. The thermoplastic composition may, for example, have a glass transition temperature of from about 35°C to about 80°C, in some embodiments from about 40°C to about 80°C, and in some embodiments, from about 50°C to about 65°C. The melt flow rate of the thermoplastic composition may also be similar to that of the renewable polyester. For example, the melt flow rate of the composition (on a dry basis) may be from about 0.1 to about 70 grams per 10 minutes, in some embodiments from about 0.5 to about 50 grams per 10 minutes, and in some embodiments, from about 5 to about 25 grams per 10 minutes, determined at a load of 2160 grams and at a temperature of 190°C.

D. Compatibilizer

As indicated above, the polymeric toughening additive is generally selected so that it has a solubility parameter relatively close to that of the renewable polyester. Among other things, this can enhance the compatibility of the phases and improve the overall distribution of the discrete domains within the continuous phase. Nevertheless, a compatibilizer is employed to further enhance the compatibility between the renewable polyester and the polymeric toughening additive. The compatibilizers typically constitute from about 0.5 wt.% to about 20 wt.%, in some embodiments from about 1 wt.% to about 15 wt.%, and in some embodiments, from about 1.5 wt. % to about 10 wt.% of the thermoplastic composition.

The compatibilizer is a polyepoxide modifier that contains, on average, at least two oxirane rings per molecule.

Without intending to be limited by theory, it is believed that such polyepoxide molecules can induce reaction of the renewable polyester under certain conditions, thereby improving its melt strength without significantly reducing glass transition temperature. The reaction may involve chain extension, side chain branching, grafting, copolymer formation, etc. Chain extension, for instance, may occur through a variety of different reaction pathways. For instance, the modifier may enable a nucleophilic ring-opening reaction via a carboxyl terminal group of the renewable polyester (esterification) or via a hydroxyl group (etherification). Oxazoline side reactions may likewise occur to form esteramide moieties. Through such reactions, the molecular weight of the renewable polyester may be increased to counteract the degradation often observed during melt processing. While it is desirable to induce a reaction with the renewable polyester as described above, the present inventors have discovered that too much of a reaction can lead to crosslinking between polyester backbones. If such crosslinking is allowed to proceed to a significant extent, the resulting polymer blend can become brittle and difficult to form into a film with the desired strength and elongation properties.

In this regard, the present inventors have discovered that polyepoxide modifiers having a relatively low epoxy functionality are particularly effective, which may be quantified by its "epoxy equivalent weight." The epoxy equivalent weight reflects the amount of resin that contains one molecule of an epoxy group, and it may be calculated by dividing the number average molecular weight of the modifier by the number of epoxy groups in the molecule. The polyepoxide modifier of the present invention typically has a number average molecular weight from about 7,500 to about 250,000 grams per mole, in some embodiments from about 15,000 to about 150,000 grams per mole, and in some embodiments, from about 20,000 to 100,000 grams per mole, with a polydispersity index typically ranging from 2.5 to 7. The polyepoxide modifier may contain less than 50, in some embodiments from 5 to 45, and in some embodiments, from 15 to 40 epoxy groups. In turn, the epoxy equivalent weight may be less than about 15,000 grams per mole, in some embodiments from about 200 to about 10,000 grams per mole, and in some embodiments, from about 500 to about 7,000 grams per mole.

The polyepoxide may be a linear or branched, homopolymer or copolymer (e.g., random, graft, block, etc.) containing terminal epoxy groups, skeletal oxirane units, and/or pendent epoxy groups. The monomers employed to form such polyepoxides may vary. In one particular embodiment, for example, the polyepoxide modifier contains at least one epoxy-functional (meth)acrylic monomeric component. As used herein, the term "(meth)acrylic" includes acrylic and methacrylic monomers, as well as salts or esters thereof, such as acrylate and methacrylate monomers. For example, suitable epoxy-functional (meth)acrylic monomers may include, but are not limited to, those containing 1,2-epoxy groups, such as glycidyl acrylate and glycidyl methacrylate. Other suitable epoxy-functional monomers include allyl glycidyl ether, glycidyl ethacrylate, and glycidyl itoconate.

The polyepoxide typically has a relatively high molecular weight, as indicated above, so that it can not only result in chain extension of the renewable polyester, but also help to achieve the desired blend morphology. The resulting melt flow rate of the polymer is thus typically within a range of from about 10 to about 200 grams per 10 minutes, in some embodiments from about 40 to about 150 grams per 10 minutes, and in some embodiments, from about 60 to about 120 grams per 10 minutes, determined at a load of 2160 grams and at a temperature of 190°C.

If desired, additional monomers may also be employed in the polyepoxide to help achieve the desired molecular weight. Such monomers may vary and include, for example, ester monomers, (meth)acrylic monomers, olefin monomers, amide monomers, etc. In one particular embodiment, for example, the polyepoxide modifier includes at least one linear or branched $\alpha$-olefin monomer, such as those having from 2 to 20 carbon atoms and preferably from 2 to 8 carbon atoms. Specific examples include ethylene, propylene, 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. Particularly desired $\alpha$-olefin comonomers are ethylene and propylene.

Another suitable monomer may include a (meth)acrylic monomer that is not epoxy-functional. Examples of such (meth)acrylic monomers may include methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, 2-hydroxyethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, isobornyl methacrylate, etc., as well as combinations thereof.

In one particularly desirable embodiment of the present invention, the polyepoxide modifier is a terpolymer formed from an epoxy-functional (meth)acrylic monomeric component, $\alpha$-olefin monomeric component, and non-epoxy functional (meth)acrylic monomeric component. For example, the polyepoxide modifier may be poly(ethylene-co-methylacrylate-co-glycidyl methacrylate), which has the following structure:

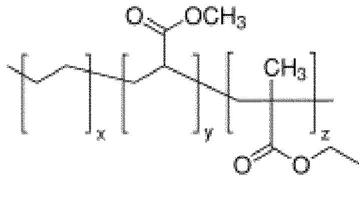

wherein, x, y, and z are 1 or greater.

The epoxy functional monomer may be formed into a polymer using a variety of known techniques. For example, a monomer containing polar functional groups may be grafted onto a polymer backbone to form a graft copolymer. Such grafting techniques are well known in the art and described, for instance, in U.S. Patent No. 5,179,164. In other embodiments, a monomer containing epoxy functional groups may be copolymerized with a monomer to form a block or random copolymer using known free radical polymerization techniques, such as high pressure reactions, Ziegler-Natta catalyst reaction systems, single site catalyst (e.g., metallocene) reaction systems, etc.

The relative portion of the monomeric component(s) may be selected to achieve a balance between epoxy-reactivity and melt flow rate. More particularly, high epoxy monomer contents can result in good reactivity with the renewable polyester, but too high of a content may reduce the melt flow rate to such an extent that the polyepoxide modifier adversely impacts the melt strength of the polymer blend. Thus, in most embodiments, the epoxy-functional (meth)acrylic monomer(s) constitute from about 1 wt.% to about 25 wt.%, in some embodiments from about 2 wt.% to about 20 wt.%, and in some embodiments, from about 4 wt.% to about 15 wt.% of the copolymer. The $\alpha$-olefin monomer(s) may likewise constitute from about 55 wt.% to about 95 wt.%, in some embodiments from about 60 wt.% to about 90 wt.%, and in some embodiments, from about 65 wt.% to about 85 wt.% of the copolymer. When employed, other monomeric components (e.g., non-epoxy functional (meth)acrylic monomers) may constitute from about 5 wt.% to about 35 wt.%, in some embodiments from about 8 wt.% to about 30 wt.%, and in some embodiments, from about 10 wt.% to about 25 wt.% of the copolymer. One specific example of a suitable polyepoxide modifier that may be used in the present invention is commercially available from Arkema under the name LOTADER® AX8950 or AX8900. LOTADER® AX8950, for instance, has a melt flow rate of 70 to 100 g/10 min and has a glycidyl methacrylate monomer content of 7 wt.% to 11 wt.%, a methyl acrylate monomer content of 13 wt.% to 17 wt.%, and an ethylene monomer content of 72 wt.% to 80 wt.%.

In addition to controlling the type and relative content of the monomers used to form the polyepoxide modifier, the overall weight percentage may also be controlled to achieve the desired benefits. For example, if the modification level is too low, the desired increase in melt strength and mechanical properties may not be achieved. The present inventors have also discovered, however, that if the modification level is too high, the ability to form a film may be restricted due to strong molecular interactions (e.g., crosslinking) and physical network formation by the epoxy functional groups. Thus, the polyepoxide modifier is typically employed in an amount of from about 0.05 wt.% to about 10 wt.%, in some embodiments from about 0.1 wt.% to about 8 wt.%, in some embodiments from about 0.5 wt.% to about 5 wt.%, and in some embodiments, from about 1 wt.% to about 3 wt.%, based on the weight of the renewable polyesters employed in the composition. The polyepoxide modifier may also constitute from about 0.05 wt.% to about 10 wt.%, in some embodiments from about 0.05 wt.% to about 8 wt.%, in some embodiments from about 0.1 wt.% to about 5 wt.%, and in some embodiments, from about 0.5 wt.% to about 3 wt.%, based on the total weight of the composition.

In addition to polyepoxides, other reactive compatibilizers may also be employed in the present invention, such as oxazoline-functionalized polymers, cyanide-functionalized polymers, etc. When employed, such reactive compatibilizers may be employed within the concentrations noted above for the polyepoxide modifier. In one particular embodiment, an oxazoline-grafted polyolefin may be employed that is a polyolefin grafted with an oxazoline ring-containing monomer. The oxazoline may include a 2-oxazoline, such as 2-vinyl-2-oxazoline (e.g., 2-isopropenyl-2-oxazoline), 2-fatty-alkyl-2-oxazoline (e.g., obtainable from the ethanolamide of oleic acid, linoleic acid, palmitoleic acid, gadoleic acid, erucic acid and/or arachidonic acid) and combinations thereof. In another embodiment, the oxazoline may be selected from ricinoloxazoline maleinate, undecyl-2-oxazoline, soya-2-oxazoline, ricinus-2-oxazoline and combinations thereof, for example. In yet another embodiment, the oxazoline is selected from 2-isopropenyl-2-oxazoline, 2-isopropenyl-4,4-dimethyl-2-oxazoline and combinations thereof.

E. Other Components

One unique aspect of the present invention is that a film can be formed with a relatively high void volume and breathability without the need for filler particles, such as described above, which are conventionally required to form microporous films. This can provide numerous benefits, including a potential reduction in costs and manufacturing complexity. In fact, the thermoplastic composition and/or one or more layers of the film (e.g., base layer) may be generally

free of filler particles (e.g., inorganic filler particles). For example, filler particles may be present in an amount of no more than about 10 wt.%, in some embodiments no more than about 5 wt.%, and in some embodiments, no more than about 1 wt.% of the thermoplastic composition. Nevertheless, in certain embodiments, higher amounts of filler particles may be employed in the thermoplastic composition if so desired.

In addition to being able to achieve a high degree of breathability without conventional filler particles, the present inventors have also discovered that good mechanical properties may be provided without the need for various conventional additives, such as plasticizers (e.g., solid or semi-solid polyethylene glycol). In fact, the thermoplastic composition may be generally free of plasticizers. For example, plasticizers may be present in an amount of no more than about 1 wt.%, in some embodiments no more than about 0.5 wt.%, and in some embodiments, from about 0.001 wt.% to about 0.2 wt.% of the thermoplastic composition. Of course, a wide variety of ingredients may be utilized in the composition for a variety of different reasons. For instance, materials that may be used include, without limitation, catalysts, antioxidants, stabilizers, surfactants, waxes, solid solvents, fillers, nucleating agents (e.g., calcium carbonate, etc.), particulates, and other materials added to enhance the processability of the thermoplastic composition.

## II. Blending

The raw materials (e.g., renewable polyester, toughening additive, and other optional components) may be blended using any of a variety of known techniques. In one embodiment, for example, the raw materials may be supplied separately or in combination. For instance, the raw materials may first be dry mixed together to form an essentially homogeneous dry mixture. The raw materials may likewise be supplied either simultaneously or in sequence to a melt processing device that dispersively blends the materials. Batch and/or continuous melt processing techniques may be employed. For example, a mixer/kneader, Banbury mixer, Farrel continuous mixer, single-screw extruder, twin-screw extruder, roll mill, etc., may be utilized to blend and melt process the materials. Particularly suitable melt processing devices may be a co-rotating, twin-screw extruder (e.g., ZSK-30 extruder available from Werner & Pfleiderer Corporation of Ramsey, New Jersey or a Thermo Prism™ USALAB 16 extruder available from Thermo Electron Corp., Stone, England). Such extruders may include feeding and venting ports and provide high intensity distributive and dispersive mixing. For example, the raw materials may be fed to the same or different feeding ports of the twin-screw extruder and melt blended to form a substantially homogeneous melted mixture. If desired, other additives may also be injected into the polymer melt and/or separately fed into the extruder at a different point along its length. Alternatively, the additives may be pre-blended with the renewable polyester and/or toughening additive.

Regardless of the particular processing technique chosen, the raw materials are blended under sufficient shear/pressure and heat to ensure sufficient dispersion, but not so high as to adversely reduce the size of the discrete domains so that they are incapable of achieving the desired toughness and elongation. For example, blending typically occurs at a temperature of from about 180°C to about 260°C, in some embodiments from about 185°C to about 250°C, and in some embodiments, from about 190°C to about 240°C. Likewise, the apparent shear rate during melt processing may range from about 10 $seconds^{-1}$ to about 3000 $seconds^{-1}$, in some embodiments from about 50 $seconds^{-1}$ to about 2000 $seconds^{-1}$, and in some embodiments, from about 100 $seconds^{-1}$ to about 1200 $seconds^{-1}$. The apparent shear rate is equal to $4Q/\pi R^3$, where Q is the volumetric flow rate ("$m^3/s$") of the polymer melt and R is the radius ("m") of the capillary (e.g., extruder die) through which the melted polymer flows. Of course, other variables, such as the residence time during melt processing, which is inversely proportional to throughput rate, may also be controlled to achieve the desired degree of homogeneity.

To achieve the desired shear conditions (e.g., rate, residence time, shear rate, melt processing temperature, etc.), the speed of the extruder screw(s) may be selected with a certain range. Generally, an increase in product temperature is observed with increasing screw speed due to the additional mechanical energy input into the system. For example, the screw speed may range from about 50 to about 500 revolutions per minute ("rpm"), in some embodiments from about 70 to about 300 rpm, and in some embodiments, from about 100 to about 200 rpm. This may result in a temperature that is sufficient high to disperse the toughening additive without adversely impacting the size of the resulting domains. The melt shear rate, and in turn the degree to which the polymers are dispersed, may also be increased through the use of one or more distributive and/or dispersive mixing elements within the mixing section of the extruder. Suitable distributive mixers for single screw extruders may include, for instance, Saxon, Dulmage, Cavity Transfer mixers, etc. Likewise, suitable dispersive mixers may include Blister ring, Leroy/Maddock, CRD mixers, etc. As is well known in the art, the mixing may be further improved by using pins in the barrel that create a folding and reorientation of the polymer melt, such as those used in Buss Kneader extruders, Cavity Transfer mixers, and Vortex Intermeshing Pin (VIP) mixers.

## III. Film Construction

As indicated above, the film of the present invention is generally formed by cold drawing a precursor film material that contains the rigid renewable polyester, polymeric toughening additive, and other optional components. Any known

technique may be used to form a precursor film from the blended composition, including blowing, casting, flat die extruding, etc. In one particular embodiment, the film may be formed by a blown process in which a gas (e.g., air) is used to expand a bubble of the extruded polymer blend through an annular die. The bubble is then collapsed and collected in flat film form. Processes for producing blown films are described, for instance, in U.S. Patent Nos. 3,354,506 to Ralev; 3,650,649 to Schippers; and 3,801,429 to Schrenk et al., as well as U.S. Patent Application Publication Nos. 2005/0245162 to McCormack, et al. and 2003/0068951 to Boggs, et al. In yet another embodiment, however, the film is formed using a casting technique.

Referring to Fig. 1, for instance, one embodiment of a method for forming a cast film is shown. In this embodiment, the raw materials (not shown) are supplied to the extruder 80 and then cast onto a casting roll 90 to form a single-layered precursor film 10a. If a multilayered film is to be produced, the multiple layers are co-extruded together onto the casting roll 90. The casting roll 90 may optionally be provided with embossing elements to impart a pattern to the film. Typically, the casting roll 90 is kept at temperature sufficient to solidify and quench the sheet 10a as it is formed, such as from about 20 to 60°C. If desired, a vacuum box may be positioned adjacent to the casting roll 90 to help keep the precursor film 10a close to the surface of the roll 90. Additionally, air knives or electrostatic pinners may help force the precursor film 10a against the surface of the casting roll 90 as it moves around a spinning roll. An air knife is a device known in the art that focuses a stream of air at a very high flow rate to pin the edges of the film.

Regardless of the particular nature of the precursor material, a voided network structure is introduced by stretching the material at a temperature below the glass transition temperature of the renewable polyester. Stretching may occur in the longitudinal direction (e.g., machine direction), transverse direction (e.g., cross-machine direction), or a combination thereof. The degree of stretching is generally selected in the present invention to ensure that the desired voided network is achieved, but not to such an extent that the mechanical properties of the resulting material are adversely impacted. In this regard, the precursor material is typically stretched (e.g., in the machine direction) to a draw ratio of from about 1.1 to about 3.0, in some embodiments from about 1.2 to about 2.0, and in some embodiments, from about 1.3 to about 1.8. The "draw ratio" is determined by dividing the length of the stretched material by its length before stretching. The draw rate may also vary to help achieve the desired properties, such as within the range of from about 5% to about 1000% per minute of deformation, in some embodiments from about 20% to about 500% per minute of deformation, and in some embodiments, from about 25% to about 200% per minute of deformation. The precursor material is generally kept at a temperature below the glass temperature of the renewable polyester during stretching. Among other things, this helps to ensure that the polyester chains are not altered to such an extent that the voided network becomes unstable. The precursor material is stretched at a temperature that is at least 10°C, in some embodiments at least about 20°C, and in some embodiments, at least about 30°C below then glass transition temperature. For example, the precursor material may be stretched at a temperature of from about 0°C to about 50°C, in some embodiments from about 15°C to about 40°C, and in some embodiments, from about 20°C to about 30°C. If desired, the precursor material is stretched without the application of external heat (e.g., heated rolls).

Although not required, the precursor material may be stretched in-line without having to remove it for separate processing. Various stretching techniques may be employed, such as tensile frame drawing, biaxial drawing, multi-axial drawing, profile drawing, cold air drawing, vacuum drawing, etc. For example, the precursor film material may be drawn by rolls rotating at different speeds of rotation such that the sheet is stretched to the desired draw ratio in the longitudinal direction (machine direction). The uniaxially oriented film may also be oriented in the cross-machine direction to form a "biaxially oriented" film. For example, the film may be clamped at its lateral edges by chain clips and conveyed into a tenter oven. In the tenter oven, the film may be reheated and drawn in the cross-machine direction to the desired draw ratio by chain clips diverged in their forward travel.

Referring again to Fig. 1, for instance, one particular method for forming a uniaxially stretched film is shown. As illustrated, the precursor film 10a is directed to a film-orientation unit 100 or machine direction orienter ("MDO"), such as commercially available from Marshall and Willams, Co. of Providence, Rhode Island. The MDO has a plurality of stretching rolls (such as from 5 to 8) which progressively stretch and thin the film in the machine direction, which is the direction of travel of the film through the process as shown in Fig. 1. While the MDO 100 is illustrated with eight rolls, it should be understood that the number of rolls may be higher or lower, depending on the level of stretch that is desired and the degrees of stretching between each roll. The film may be stretched in either single or multiple discrete stretching operations. It should be noted that some of the rolls in an MDO apparatus may not be operating at progressively higher speeds. The progressively faster speeds of adjacent rolls in the MDO act to stretch the film 10a. The rate at which the stretch rolls rotate determines the amount of stretch in the film and final film weight. To "cold draw" the film in the manner described above, it is typically desired that the rolls of the MDO 100 are not heated. Nevertheless, if desired, one or more rolls may be heated to a slight extent to facilitate the stretching process so long as the temperature of the film remains below the ranges noted above. Once formed, the resulting film 10b may then be wound and stored on a take-up roll 60. While not shown here, various additional potential processing and/or finishing steps known in the art, such as slitting, treating, aperturing, printing graphics, or lamination of the film with other layers (e.g., nonwoven web materials), may be performed without departing from the spirit and scope of the invention.

Cold drawing in the manner described above generally results in the formation of voids that have an axial dimension in the direction of stretching (e.g., longitudinal or machine direction) that is relatively small. For example, in one embodiment, the axial dimension of the voids may be about 5 micrometers or less, in some embodiments 2 micrometers or less, and in some embodiments, from about 25 nanometers to about 1 micrometer. In certain cases, the voids may be "micro-voids" in the sense that at least one dimension of such voids has a size of about 1 micrometer or more. For example, such micro-voids may have a dimension in a direction orthogonal to the axial dimension (i.e., transverse or cross-machine direction) that is about 1 micrometer or more, in some embodiments about 1.5 micrometers or more, and in some embodiments, from 2 micrometers to 5 micrometers. This may result in an aspect ratio for the micro-voids (the ratio of the axial dimension to the dimension orthogonal to the axial dimension) of from 0.1 to 1, in some embodiments from about 0.2 to about 0.9, and in some embodiments, from about 0.3 to about 0.8. Likewise, "nano-voids" may also be present, either alone or in conjunction with the micro-voids. Each dimension of the nano-voids is typically less than about 1 micrometer, and in some embodiments, from about 25 to about 500 nanometers.

In addition to forming a voided network as described above, drawing can also significantly increase the axial dimension of the primary domains so that they have a generally linear, elongated shape. For example, the elongated domains may have an axial dimension that is about 10% or more, in some embodiments from about 20% to about 500%, and in some embodiments, from about 50% to about 250% greater than the axial dimension of the domains prior to drawing. The axial dimension after drawing may, for instance, range from about 1 $\mu$m to about 400 $\mu$m, in some embodiments from about 5 $\mu$m to about 200 $\mu$m, and in some embodiments from about 10 $\mu$m to about 150 $\mu$m. The domains may also be relatively thin and thus have a small dimension in a direction orthogonal to the axial dimension (i.e., cross-sectional dimension). For instance, the cross-sectional dimension may be from about 0.02 to about 75 micrometers, in some embodiments from about 0.1 to about 40 micrometers, and in some embodiments, from 0.4 to about 20 micrometers in length. This may result in an aspect ratio for the domains (the ratio of the axial dimension to a dimension orthogonal to the axial dimension) of from about 2 to about 150, in some embodiments from about 3 to about 100, and in some embodiments, from about 4 to about 50.

The present inventors have also discovered that the voids can be distributed in a substantially homogeneous fashion throughout the composition. For example, the voids may be distributed in columns that are oriented in a direction generally perpendicular to the direction in which a stress is applied. These columns may be generally parallel to each other across the width of the composition. Without intending to be limited by theory, it is believed that the presence of such a homogeneously distributed voided network can result in a significant energy dissipation under load and a significantly enhanced tensile elongation.

The film of the present invention may be mono- or multi-layered. Multilayer films may be prepared by co-extrusion of the layers, extrusion coating, or by any conventional layering process. For example, the film may contain from two (2) to fifteen (15) layers, and in some embodiments, from three (3) to twelve (12) layers. Such multilayer films normally contain at least one base layer and at least one additional layer (e.g., skin layer), but may contain any number of layers desired. For example, the multilayer film may be formed from a base layer and one or more skin layers, wherein the base layer is formed from the thermoplastic composition of the present invention. In most embodiments, the skin layer(s) are formed from a thermoplastic composition such as described above. It should be understood, however, that other polymers may also be employed in the skin layer(s), such as polyolefin polymers (e.g., linear low-density polyethylene (LLDPE) or polypropylene).

The thickness of the film of the present invention may be relatively small to increase flexibility. For example, the film may have a thickness of from about 1 to about about 200 micrometers, in some embodiments from about 2 to about 150 micrometers, in some embodiments from about 5 to about 100 micrometers, and in some embodiments, from about 10 to about 60 micrometers. Despite having such a small thickness, the film of the present invention is nevertheless able to retain good mechanical properties during use. For example, the film is relatively ductile. One parameter that is indicative of the ductility of the film is the percent elongation of the film at its break point, as determined by the stress strain curve, such as obtained in accordance with ASTM Standard D638-10 at 23°C. For example, the percent elongation at break of the film in the machine direction ("MD") may be about 10% or more, in some embodiments about 50% or more, in some embodiments about 80% or more, and in some embodiments, from about 100% to about 600%. Likewise, the percent elongation at break of the film in the cross-machine direction ("CD") may be about 15% or more, in some embodiments about 40% or more, in some embodiments about 70% or more, and in some embodiments, from about 100% to about 400%. Another parameter that is indicative of ductility is the tensile modulus of the film, which is equal to the ratio of the tensile stress to the tensile strain and is determined from the slope of a stress-strain curve. For example, the film typically exhibits a MD and/or CD tensile modulus of about 2500 Megapascals ("MPa") or less, in some embodiments about 2200 MPa or less, and in some embodiments, from about 500 MPa to about 2000 MPa. The tensile modulus may be determined in accordance with ASTM D638-10 at 23°C.

Although the film is ductile, it can still be relatively strong. One parameter that is indicative of the relative strength of the film is the ultimate tensile strength, which is equal to the peak stress obtained in a stress-strain curve, such as obtained in accordance with ASTM Standard D638-10. For example, the film of the present invention may exhibit an

MD and/or CD peak stress of from about 5 to about 65 MPa, in some embodiments from about 10 MPa to about 60 MPa, and in some embodiments, from about 20 MPa to about 55 MPa. The film may also exhibit an MD and/or CD break stress of from about 5 MPa to about 60 MPa, in some embodiments from about 10 MPa to about 50 MPa, and in some embodiments, from about 20 MPa to about 45 MPa. The peak stress and break stress may be determined in accordance with ASTM D638-10 at 23°C.

If desired, the film of the present invention may be subjected to one or more additional processing steps, before and/or after cold drawing. Examples of such processes include, for instance, groove roll stretching, perforating, embossing, coating, etc. The film may also be surface treated using any of a variety of known techniques to improve its properties. For example, high energy beams (e.g., plasma, x-rays, e-beam, etc.) may be used to remove or reduce any skin layers that form on the film, to change the surface polarity, porosity, topography, etc. If desired, such surface treatment may alternatively be used before and/or after cold drawing of the film.

The film may also be laminated to one or more nonwoven web facings to reduce the coefficient of friction and enhance the cloth-like feel of the composite surface. Exemplary polymers for use in forming nonwoven web facings may include, for instance, polyolefins, e.g., polyethylene, polypropylene, polybutylene, etc.; polytetrafluoroethylene; polyesters, e.g., polyethylene terephthalate and so forth; polyvinyl acetate; polyvinyl chloride acetate; polyvinyl butyral; acrylic resins, e.g., polyacrylate, polymethylacrylate, polymethylmethacrylate, and so forth; polyamides, e.g., nylon; polyvinyl chloride; polyvinylidene chloride; polystyrene; polyvinyl alcohol; polyurethanes; polylactic acid; copolymers thereof; and so forth. If desired, renewable polymers, such as those described above, may also be employed. Synthetic or natural cellulosic polymers may also be used, including but not limited to, cellulosic esters; cellulosic ethers; cellulosic nitrates; cellulosic acetates; cellulosic acetate butyrates; ethyl cellulose; regenerated celluloses, such as viscose, rayon, and so forth. It should be noted that the polymer(s) may also contain other additives, such as processing aids or treatment compositions to impart desired properties to the fibers, residual amounts of solvents, pigments or colorants, and so forth.

Monocomponent and/or multicomponent fibers may be used to form the nonwoven web facing. Monocomponent fibers are generally formed from a polymer or blend of polymers extruded from a single extruder. Multicomponent fibers are generally formed from two or more polymers (e.g., bicomponent fibers) extruded from separate extruders. The polymers may be arranged in substantially constantly positioned distinct zones across the cross-section of the fibers. The components may be arranged in any desired configuration, such as sheath-core, side-by-side, pie, island-in-the-sea, three island, bull's eye, or various other arrangements known in the art. Multicomponent fibers having various irregular shapes may also be formed.

Fibers of any desired length may be employed, such as staple fibers, continuous fibers, etc. In one particular embodiment, for example, staple fibers may be used that have a fiber length in the range of from about 1 to about 150 millimeters, in some embodiments from about 5 to about 50 millimeters, in some embodiments from about 10 to about 40 millimeters, and in some embodiments, from about 10 to about 25 millimeters. Although not required, carding techniques may be employed to form fibrous layers with staple fibers as is well known in the art. For example, fibers may be formed into a carded web by placing bales of the fibers into a picker that separates the fibers. Next, the fibers are sent through a combing or carding unit that further breaks apart and aligns the fibers in the machine direction so as to form a machine direction-oriented fibrous nonwoven web. The carded web may then be bonded using known techniques to form a bonded carded nonwoven web.

If desired, the nonwoven web facing used to form the nonwoven composite may have a multi-layer structure. Suitable multi-layered materials may include, for instance, spunbond/meltblown/spunbond (SMS) laminates and spunbond/meltblown (SM) laminates. Another example of a multi-layered structure is a spunbond web produced on a multiple spin bank machine in which a spin bank deposits fibers over a layer of fibers deposited from a previous spin bank. Such an individual spunbond nonwoven web may also be thought of as a multi-layered structure. In this situation, the various layers of deposited fibers in the nonwoven web may be the same, or they may be different in basis weight and/or in terms of the composition, type, size, level of crimp, and/or shape of the fibers produced. As another example, a single nonwoven web may be provided as two or more individually produced layers of a spunbond web, a carded web, etc., which have been bonded together to form the nonwoven web. These individually produced layers may differ in terms of production method, basis weight, composition, and fibers as discussed above. A nonwoven web facing may also contain an additional fibrous component such that it is considered a composite. For example, a nonwoven web may be entangled with another fibrous component using any of a variety of entanglement techniques known in the art (e.g., hydraulic, air, mechanical, etc.). In one embodiment, the nonwoven web is integrally entangled with cellulosic fibers using hydraulic entanglement. A typical hydraulic entangling process utilizes high pressure jet streams of water to entangle fibers to form a highly entangled consolidated fibrous structure, e.g., a nonwoven web. The fibrous component of the composite may contain any desired amount of the resulting substrate.

The basis weight of the nonwoven web facing may generally vary, such as from about 5 grams per square meter ("gsm") to 120 gsm, in some embodiments from about 8 gsm to about 70 gsm, and in some embodiments, from about 10 gsm to about 35 gsm. When using multiple nonwoven web facings, such materials may have the same or different basis weights.

IV. Applications

The film of the present invention may be used in a wide variety of applications, such as a packaging film, such as an individual wrap, packaging pouch, or bag for the disposal of a variety of articles, such as food products, paper products (e.g., tissue, wipes, paper towels, etc.), absorbent articles, barrier films, filtration media, nanoporous membranes, etc. Various suitable pouch, wrap, or bag configurations for absorbent articles are disclosed, for instance, in U.S. Patent Nos. 6,716,203 to Sorebo, et al. and 6,380,445 to Moder, et al., as well as U.S. Patent Application Publication No. 2003/0116462 to Sorebo, et al.

The film may also be employed in other applications. For example, the film may be used in an absorbent article. An "absorbent article" generally refers to any article capable of absorbing water or other fluids. Examples of some absorbent articles include, but are not limited to, personal care absorbent articles, such as diapers, training pants, absorbent underpants, incontinence articles, feminine hygiene products (e.g., sanitary napkins, pantiliners, etc.), swim wear, baby wipes, and so forth; medical absorbent articles, such as garments, fenestration materials, underpads, bedpads, bandages, absorbent drapes, and medical wipes; food service wipers; clothing articles; and so forth. Several examples of such absorbent articles are described in U.S. Patent Nos. 5,649,916 to DiPalma, et al.; 6,110,158 to Kielpikowski; 6,663,611 to Blanev, et al. Still other suitable articles are described in U.S. Patent Application Publication No. 2004/0060112 A1 to Fell et al., as well as U.S. Patent Nos. 4,886,512 to Damico et al.; 5,558,659 to Sherrod et al.; 6,888,044 to Fell et al.; and 6,511,465 to Freiburger et al. Materials and processes suitable for forming such absorbent articles are well known to those skilled in the art.

In this regard, one particular embodiment of an absorbent article that may employ the film of the present invention will now be described in more detail. For instance, the absorbent article may include a main body portion containing a topsheet, an outer cover or backsheet, an absorbent core positioned between the backsheet and the topsheet, and a pair of flaps extending from each longitudinal side of the main body portion. The topsheet defines a bodyfacing surface of the absorbent article. The absorbent core is positioned inward from the outer periphery of the absorbent article and includes a body-facing side positioned adjacent the topsheet and a garment-facing surface positioned adjacent the backsheet. In one particular embodiment of the present invention, the backsheet is a film formed from the thermoplastic composition of the present invention and is generally liquid-impermeable and optionally vapor-permeable. The film used to form the backsheet may also be laminated to one or more nonwoven web facings such as described above.

The topsheet is generally designed to contact the body of the user and is liquid-permeable. The topsheet may surround the absorbent core so that it completely encases the absorbent article. Alternatively, the topsheet and the backsheet may extend beyond the absorbent core and be peripherally joined together, either entirely or partially, using known techniques. Typically, the topsheet and the backsheet are joined by adhesive bonding, ultrasonic bonding, or any other suitable joining method known in the art. The topsheet is sanitary, clean in appearance, and somewhat opaque to hide bodily discharges collected in and absorbed by the absorbent core. The topsheet further exhibits good strike-through and rewet characteristics permitting bodily discharges to rapidly penetrate through the topsheet to the absorbent core, but not allow the body fluid to flow back through the topsheet to the skin of the wearer. For example, some suitable materials that may be used for the topsheet include nonwoven materials, perforated thermoplastic films, or combinations thereof. A nonwoven fabric made from polyester, polyethylene, polypropylene, bicomponent, nylon, rayon, or like fibers may be utilized. For instance, a white uniform spunbond material is particularly desirable because the color exhibits good masking properties to hide menses that has passed through it. U.S. Patent Nos. 4,801,494 to Datta, et al. and 4,908,026 to Sukiennik, et al. teach various other cover materials that may be used in the present invention.

The topsheet may also contain a plurality of apertures formed therethrough to permit body fluid to pass more readily into the absorbent core. The apertures may be randomly or uniformly arranged throughout the topsheet, or they may be located only in the narrow longitudinal band or strip arranged along the longitudinal axis of the absorbent article. The apertures permit rapid penetration of body fluid down into the absorbent core. The size, shape, diameter and number of apertures may be varied to suit one's particular needs.

The absorbent article may also contain an absorbent core positioned between the topsheet and the backsheet. The absorbent core may be formed from a single absorbent member or a composite containing separate and distinct absorbent members. It should be understood, however, that any number of absorbent members may be utilized in the present invention. For example, in an embodiment, the absorbent core may contain an intake member positioned between the topsheet and a transfer delay member. The intake member may be made of a material that is capable of rapidly transferring, in the z-direction, body fluid that is delivered to the topsheet. The intake member may generally have any shape and/or size desired. In one embodiment, the intake member has a rectangular shape, with a length equal to or less than the overall length of the absorbent article, and a width less than the width of the absorbent article. For example, a length of between about 150 mm to about 300 mm and a width of between about 10 mm to about 60 mm may be utilized.

Any of a variety of different materials may be used for the intake member to accomplish the above-mentioned functions. The material may be synthetic, cellulosic, or a combination of synthetic and cellulosic materials. For example,

airlaid cellulosic tissues may be suitable for use in the intake member. The airlaid cellulosic tissue may have a basis weight ranging from about 10 grams per square meter (gsm) to about 300 gsm, and in some embodiments, between about 100 gsm to about 250 gsm. In one embodiment, the airlaid cellulosic tissue has a basis weight of about 200 gsm. The airlaid tissue may be formed from hardwood and/or softwood fibers. The airlaid tissue has a fine pore structure and provides an excellent wicking capacity, especially for menses.

If desired, a transfer delay member may be positioned vertically below the intake member. The transfer delay member may contain a material that is less hydrophilic than the other absorbent members, and may generally be characterized as being substantially hydrophobic. For example, the transfer delay member may be a nonwoven fibrous web composed of a relatively hydrophobic material, such as polypropylene, polyethylene, polyester or the like, and also may be composed of a blend of such materials. One example of a material suitable for the transfer delay member is a spunbond web composed of polypropylene, multilobal fibers. Further examples of suitable transfer delay member materials include spunbond webs composed of polypropylene fibers, which may be round, tri-lobal or poly-lobal in cross-sectional shape and which may be hollow or solid in structure. Typically the webs are bonded, such as by thermal bonding, over about 3% to about 30% of the web area. Other examples of suitable materials that may be used for the transfer delay member are described in U.S. Patent Nos. 4,798,603 to Meyer, et al. and 5,248,309 to Serbiak, et al. To adjust the performance of the invention, the transfer delay member may also be treated with a selected amount of surfactant to increase its initial wettability.

The transfer delay member may generally have any size, such as a length of about 150 mm to about 300 mm. Typically, the length of the transfer delay member is approximately equal to the length of the absorbent article. The transfer delay member may also be equal in width to the intake member, but is typically wider. For example, the width of the transfer delay member may be from between about 50 mm to about 75 mm, and particularly about 48 mm. The transfer delay member typically has a basis weight less than that of the other absorbent members. For example, the basis weight of the transfer delay member is typically less than about 150 grams per square meter (gsm), and in some embodiments, between about 10 gsm to about 100 gsm. In one particular embodiment, the transfer delay member is formed from a spunbonded web having a basis weight of about 30 gsm.

Besides the above-mentioned members, the absorbent core may also include a composite absorbent member, such as a coform material. In this instance, fluids may be wicked from the transfer delay member into the composite absorbent member. The composite absorbent member may be formed separately from the intake member and/or transfer delay member, or may be formed simultaneously therewith. In one embodiment, for example, the composite absorbent member may be formed on the transfer delay member or intake member, which acts a carrier during the coform process described above.

Although various configurations of an absorbent article have been described above, it should be understood that other configurations are also included within the scope of the present invention. Further, the present invention is by no means limited to backsheets and the film of the present invention may be incorporated into a variety of different components of an absorbent article. For example, a release liner of an absorbent article may include the film of the present invention.

The present invention may be better understood with reference to the following examples.

## Test Methods

*Melt Flow Rate:*

The melt flow rate ("MFR") is the weight of a polymer (in grams) forced through an extrusion rheometer orifice (0.0825-inch diameter (2.0955 mm)) when subjected to a load of 2160 grams in 10 minutes, typically at 190°C or 230°C. Unless otherwise indicated, melt flow rate is measured in accordance with ASTM Test Method D1239 with a Tinius Olsen Extrusion Plastometer.

*Thermal Properties:*

The glass transition temperature ($T_g$) may be determined by dynamic mechanical analysis (DMA) in accordance with ASTM E1640-09. A Q800 instrument from TA Instruments may be used. The experimental runs may be executed in tension/tension geometry, in a temperature sweep mode in the range from -120°C to 150°C with a heating rate of 3°C/min. The strain amplitude frequency may be kept constant (2 Hz) during the test. Three (3) independent samples may be tested to get an average glass transition temperature, which is defined by the peak value of the tan $\delta$ curve, wherein tan $\delta$ is defined as the ratio of the loss modulus to the storage modulus (tan $\delta$ = E"/E').

The melting temperature may be determined by differential scanning calorimetry (DSC). The differential scanning calorimeter may be a DSC Q100 Differential Scanning Calorimeter, which was outfitted with a liquid nitrogen cooling accessory and with a UNIVERSAL ANALYSIS 2000 (version 4.6.6) analysis software program, both of which are available

from T.A. Instruments Inc. of New Castle, Delaware. To avoid directly handling the samples, tweezers or other tools are used. The samples are placed into an aluminum pan and weighed to an accuracy of 0.01 milligram on an analytical balance. A lid is crimped over the material sample onto the pan. Typically, the resin pellets are placed directly in the weighing pan.

The differential scanning calorimeter is calibrated using an indium metal standard and a baseline correction is performed, as described in the operating manual for the differential scanning calorimeter. A material sample is placed into the test chamber of the differential scanning calorimeter for testing, and an empty pan is used as a reference. All testing is run with a 55-cubic centimeter per minute nitrogen (industrial grade) purge on the test chamber. For resin pellet samples, the heating and cooling program is a 2-cycle test that began with an equilibration of the chamber to -30°C, followed by a first heating period at a heating rate of 10°C per minute to a temperature of 200°C, followed by equilibration of the sample at 200°C for 3 minutes, followed by a first cooling period at a cooling rate of 10°C per minute to a temperature of -30°C, followed by equilibration of the sample at - 30°C for 3 minutes, and then a second heating period at a heating rate of 10°C per minute to a temperature of 200°C. All testing is run with a 55-cubic centimeter per minute nitrogen (industrial grade) purge on the test chamber.

The results are evaluated using the UNIVERSAL ANALYSIS 2000 analysis software program, which identified and quantified the glass transition temperature ($T_g$) of inflection, the endothermic and exothermic peaks, and the areas under the peaks on the DSC plots. The glass transition temperature is identified as the region on the plot-line where a distinct change in slope occurred, and the melting temperature is determined using an automatic inflection calculation.

*Tensile Properties*

Films were tested for tensile properties (peak stress, modulus, strain at break, and energy per volume at break) on a MTS Synergie 200 tensile frame. The test was performed in accordance with ASTM D638-10 (at about 23°C). Film samples were cut into dog bone shapes with a center width of 3.0 mm before testing. The dog-bone film samples were held in place using grips on the MTS Synergie 200 device with a gauge length of 18.0 mm. The film samples were stretched at a crosshead speed of 5.0 in/min (12.7 cm/min) until breakage occurred. Five samples were tested for each film in both the machine direction (MD) and the cross direction (CD). A computer program called TestWorks 4 was used to collect data during testing and to generate a stress versus strain curve from which a number of properties were determined, including modulus, peak stress, elongation, and energy to break.

*Expansion Ratio, Density, and Percent Void Volume*

To determine expansion ratio, density, and percent void volume, the width ($W_i$) and thickness ($T_i$) of the specimen were initially measured prior to cold drawing. The length ($L_i$) before drawing was also determined by measuring the distance between two markings on a surface of the specimen. Thereafter, the specimen was cold drawn to initiate voiding. The width ($W_f$), thickness ($T_f$), and length ($L_f$) of the specimen was then measured to the nearest 0.01 mm utilizing Digimatic Caliper (Mitutoyo Corporation). The volume ($V_i$) before cold drawing was calculated by $W_i \times T_i \times L_i = V_i$. The volume ($V_f$) after cold drawing was also calculated by $W_f \times T_f \times L_f = V_f$. The expansion ratio ($\Phi$) was calculated by $\Phi = V_f/V_i$; the density ($P_f$) was calculated by: $P_f = P_i/\Phi$, where $P_i$ is density of precursor material; and the percent void volume (% $V_v$) was calculated by: $\%V_v = (1 - 1/\Phi) \times 100$.

*Moisture Content*

Moisture content may be determined using an Arizona Instruments Computrac Vapor Pro moisture analyzer (Model No. 3100) in substantial accordance with ASTM D 7191-05. The test temperature (§X2.1.2) may be 130°C, the sample size (§X2.1.1) may be 2 to 4 grams, and the vial purge time (§X2.1.4) may be 30 seconds. Further, the ending criteria (§X2.1.3) may be defined as a "prediction" mode, which means that the test is ended when the built-in programmed criteria (which mathematically calculates the end point moisture content) is satisfied.

*Water Vapor Transmission Rate ("WVTR")*

The test used to determine the WVTR of a material may vary based on the nature of the material. One technique for measuring the WVTR value involves the use of a test procedure standardized by INDA (Association of the Nonwoven Fabrics Industry), number IST-70.4-99, entitled "STANDARD TEST METHOD FOR WATER VAPOR TRANSMISSION RATE THROUGH NONWOVEN AND PLASTIC FILM USING A GUARD FILM AND VAPOR PRESSURE SENSOR". The INDA test procedure is summarized as follows. A dry chamber is separated from a wet chamber of known temperature and humidity by a permanent guard film and the sample material to be tested. The purpose of the guard film is to define a definite air gap and to quiet or still the air in the air gap while the air

gap is characterized. The dry chamber, guard film, and the wet chamber make up a diffusion cell in which the test film is sealed. The sample holder is known as the Permatran-W Model 100K manufactured by Mocon/Modem Controls, Inc., Minneapolis, Minnesota. A first test is made of the WVTR of the guard film and the air gap between an evaporator assembly that generates 100% relative humidity. Water vapor diffuses through the air gap and the guard film and then mixes with a dry gas flow that is proportional to water vapor concentration. The electrical signal is routed to a computer for processing. The computer calculates the transmission rate of the air gap and the guard film and stores the value for further use.

The transmission rate of the guard film and air gap is stored in the computer as CalC. The sample material is then sealed in the test cell. Again, water vapor diffuses through the air gap to the guard film and the test material and then mixes with a dry gas flow that sweeps the test material. Also, again, this mixture is carried to the vapor sensor. The computer then calculates the transmission rate of the combination of the air gap, the guard film, and the test material. This information is then used to calculate the transmission rate at which moisture is transmitted through the test material according to the equation:

$$TR^{-1}_{test\ material} = TR^{-1}_{test\ material,guardfilm,airgap} - TR^{-1}_{guardfilm,\ airgap}$$

The water vapor transmission rate ("WVTR") is then calculated as follows:

$$\mathrm{WVTR} = \frac{F\rho_{sat(T)}RH}{AP_{sat(T)}(1-RH)}$$

wherein,

F = the flow of water vapor in $cm^3$ per minute;
$\rho_{sat(T)}$ = the density of water in saturated air at temperature T;
RH = the relative humidity at specified locations in the cell;
A = the cross sectional area of the cell; and
$P_{sat(T)}$ = the saturation vapor pressure of water vapor at temperature T.

**EXAMPLE 1 (Control)**

Films formed from 100% polylactic acid (PLA) were formed as a control by extruding PLA 6201D (Natureworks®, melt flow rate of 10 g/10 minutes at 190°C) into a film. The pellets were flood fed into a Rheomix 252 signal screw extruder with a L/D ratio of 25:1 heated to a temperature of about 208°C where the molten PLA exited through a Haake 6 inch (15cm) width cast film die and drawn via a Haake take-up roller to a film thickness ranging from 41.9 μm to 48.3 μm.

**EXAMPLE 2**

The ability to form films from a blend of 85.3 wt.% polylactic acid (PLA 6201D, Natureworks®) 9.5 wt.% of a toughening additive and 1.4% polyepoxide modifier, and 3.8wt.% internal interfacial modifier (IIM) was demonstrated. The toughening additive was Vistamaxx™ 2120 (ExxonMobil), which is a polyolefin copolymer/elastomer with a melt flow rate of 29 g/10 min (190°C, 2160 g) and a density of 0.866 $g/cm^3$. The polyepoxide modifier was poly(ethylene-co-methyl acrylate-co-glycidyl methacrylate) (Lotader® AX8950, Arkema) having a melt flow rate of 70-100 g/10 min (190°C/2160 g), a glycidyl methacrylate content of 7 to 11 wt.%, methyl acrylate content of 13 to 17 wt.%, and ethylene content of 72 to 80 wt.%. The IIM was PLURIOL® WI285 Lubricant Basestock from BASF. The polymers were fed into a co-rotating, twin-screw extruder (ZSK-30, diameter of 30 mm, length of 1328 millimeters) for compounding that was manufactured by Werner and Pfleiderer Corporation of Ramsey, New Jersey. The extruder possessed 14 zones, numbered consecutively 1-14 from the feed hopper to the die. The first barrel zone #1 received the resins *via* gravimetric feeder at a total throughput of 15 pounds per hour (1.9 g/s). The PLURIOL® WI285 was added via injector pump into barrel zone #2 at a feed rate of 0.6 Ibs/hrs (0.076 g/s). The die used to extrude the resin had 3 die openings (6 millimeters in diameter) that were separated by 4 millimeters. Upon formation, the extruded resin was cooled on a fan-cooled conveyor belt and formed into pellets by a Conair pelletizer. The extruder screw speed was 200 revolutions per minute ("rpm"). The pellets were then flood fed into a Rheomix 252 single screw extruder with a L/D ratio of 25:1 and heated to a temperature of 212°C where the molten blend exited through a Haake 6 inch (15 cm) width s cast film die and drawn to a film thickness ranging from 39.4 μm to 50.8 μm via Haake take-up roll. The film was cold drawn in the machine

direction to a longitudinal deformation of 160% at a pull rate of 50 mm/min (deformation rate of 67%/min) via MTS Synergie 200 tensile frame with grips at a gage length of 75 mm.

SEM photomicrographs were taken of Example 2 before and after cold drawing. The results are shown in Figs. 2-3. As shown, the PLA matrix of Example 2 underwent debonding, which resulted in the formation of a plurality of voids in the film.

## EXAMPLE 3

Films were formed as described in Example 2, except that the film was also stretched in the cross-machine direction to a deformation of 100% at a pull rate of 50 mm/min (deformation rate of 100%/min) with grips at a gage length of 50 mm. Various properties of the films of Examples 1-3 were tested as described above. The results are set forth below in Tables 1-2.

**Table 1: Film Properties**

| Ex. | Average Thickness (μm) | Expansion Ratio (ϕ) | Percent Void Volume (%$V_v$) | Density (g/cm$^3$) | WVTR (g/m$^2$*24 hrs.) |
|---|---|---|---|---|---|
| 1* | 41.9 | - | n/a | 1.19 | <500 |
| 2 | 41.4 | 1.82 | 45 | 0.65 | 5453 |
| 3 | 34.0 | 2.13 | 53 | 0.56 | 4928 |
| control | | | | | |

**Table 2: Tensile Properties**

| Example | | Avg. Thickness (μm) | Avg. Modulus (MPa) | Avg. Yield Stress (MPa) | Avg. Break Stress (MPa) | Avg. Strain at Break (%) | Avg. Energy per Volume at Break (J/cm$^3$) |
|---|---|---|---|---|---|---|---|
| 1* | MD | 44.2 | 2535 | 69.5 | 60.4 | 6.3 | 3.3 |
| | CD | 46.2 | 2458 | 64.7 | 50.9 | 10.1 | 5.1 |
| 2 | MD | 44.5 | 466 | 41.4 | 36.9 | 54.6 | 16.8 |
| | CD | 40.4 | 501 | 15.9 | 15.9 | 62.6 | 9.4 |
| 3 | MD | 37.3 | 265 | 26.7 | 26.3 | 85.5 | 15.8 |
| | CD | 34.3 | 386 | 25.1 | 25.2 | 45.8 | 9.3 |
| *control | | | | | | | |

## Claims

**1.** A breathable film having a water vapor transmission rate of 500 g/m$^2$/24 hours or more, and preferably 2,000 g/m$^2$/24 hours or more, the film comprising a thermoplastic composition that includes:

at least one rigid renewable polyester having a glass transition temperature of 0°C or more, and preferably from 50°C to 75°C;
at least one polymeric toughening additive which includes a polyolefin;
at least one interphase modifier, wherein the interphase modifier is a silicone, silicone-polyether copolymer, aliphatic polyester, aromatic polyester, alkylene glycol, alkane diol, amine oxide, fatty acid ester, or a combination thereof; and
at least one polyepoxide compatibilizer containing, on average, at least two oxirane rings per molecule;
wherein the thermoplastic composition has a morphology in which a plurality of discrete primary domains and voids are dispersed within a continuous phase, the domains containing the polymeric toughening additive and the continuous phase containing the renewable polyester,
wherein the average percent volume of the composition that is occupied by the voids is from 20% to 80% per

cubic centimeter, and preferably from 40% to 60% per cubic centimeter;
wherein the water vapor transmission rate is determined according to INDA test method IST-70.4-99.

**2.** The breathable film of claim 1, wherein the thermoplastic composition is free of inorganic filler particles.

**3.** The breathable film of claim 1 or 2, wherein the aspect ratio of the voids is from 0.1 to 1; and preferably wherein the voids have a longitudinal dimension of 2 micrometers or less and a transverse dimension of from 2 micrometers to 5 micrometers.

**4.** The breathable film of any of the foregoing claims, wherein the thermoplastic composition has a density of 1.4 grams per cubic centimeter or less.

**5.** The breathable film of any of the foregoing claims, wherein the renewable polyester is a polylactic acid or a polyethylene terephthalate.

**6.** The breathable film of any of the foregoing claims, wherein the ratio of the solubility parameter for the renewable polyester to the solubility parameter of the polymeric toughening additive is from 0.5 to 1.5, the ratio of the melt flow rate for the renewable polyester to the melt flow rate of the polymeric toughening additive is from 0.2 to 8, and the ratio of the Young's modulus elasticity of the renewable polyester to the Young's modulus of elasticity of the polymeric toughening additive is from 2 to 500.

**7.** The breathable film of any of the foregoing claims, wherein the polymeric toughening additive includes a propylene homopolymer, propylene/$\alpha$-olefin copolymer, ethylene/$\alpha$-olefin copolymer, or a combination thereof.

**8.** The breathable film of any of the foregoing claims, wherein the interphase modifier preferably has a kinematic viscosity of from 0.7 to 200 centistokes, determined at a temperature of 40°C.

**9.** The breathable film of any preceding claim, wherein the interphase modifier is hydrophobic.

**10.** The breathable film of any preceding claim, wherein the polymeric toughening additive constitutes from 1 wt.% to 30 wt.% based on the weight of the renewable polyester and the interphase modifier constitutes from 0.1 wt.% to 20 wt.% based on the weight of the renewable polyester.

**11.** The breathable film of any of the foregoing claims, wherein the polyepoxide compatibilizer includes an epoxy-functional (meth)acrylic monomeric component.

**12.** The breathable film of any of the foregoing claims, wherein the renewable polyester constitutes 70 wt.% or more of the thermoplastic composition.

**13.** The film of any of the foregoing claims, wherein the film is a multi-layered film that contains a base layer and at least one additional layer, wherein the base layer contains the thermoplastic composition.

**14.** An absorbent article comprising the film of any of the foregoing claims; the article preferably further comprising an absorbent core positioned between the generally liquid-impermeable film and a liquid-permeable layer; wherein the film is preferably joined to a nonwoven web material.

**15.** A method for forming a breathable film, the method comprising:
forming a blend that contains:

a rigid renewable polyester, such as a polylactic acid;
a polymeric toughening additive which includes a polyolefin;
at least one interphase modifier, wherein the interphase modifier is a silicone, silicone-polyether copolymer, aliphatic polyester, aromatic polyester, alkylene glycol, alkane diol, amine oxide, fatty acid ester, or a combination thereof; and
at least one polyepoxide compatibilizer, containing, on average, at least two oxirane rings per molecule;
wherein the rigid renewable polyester has a glass transition temperature of 0°C or more;
extruding the blend onto a surface to form a precursor film material; and
stretching the precursor film material at a temperature that is lower than the glass transition temperature of the

renewable polyester, and preferably at a temperature that is at least 10°C below the glass transition temperature of the renewable polyester, to form a breathable film that contains a plurality of voids.

## Patentansprüche

1. Atmungsaktive Folie mit einer Wasserdampfdurchlässigkeitsrate von 500 $g/m^2$/24 Stunden oder mehr und vorzugsweise 2000 $g/m^2$/24 Stunden oder mehr, wobei die Folie eine thermoplastische Zusammensetzung umfasst, die Folgendes einschließt:

   wenigstens einen starren erneuerbaren Polyester mit einer Glasübergangstemperatur von 0 °C oder mehr und vorzugsweise von 50 °C bis 75 °C;
   wenigstens ein polymeres schlagfestmachendes Additiv, das ein Polyolefin einschließt;
   wenigstens einen Interphasenmodifizierer, wobei es sich beim Interphasenmodifizierer um ein Silikon, ein Silikon-Polyether-Copolymer, einen aliphatischen Polyester, aromatischen Polyester, ein Alkylenglycol, Alkandiol, Aminoxid, einen Fettsäureester oder eine Kombination davon handelt; und
   wenigstens einen Polyepoxid-Verträglichmacher, der durchschnittlich wenigstens zwei Oxiranringe pro Molekül enthält;
   wobei die thermoplastische Zusammensetzung eine Morphologie aufweist, in der eine Mehrzahl von diskreten primären Domänen und Hohlräumen innerhalb einer kontinuierlichen Phase verteilt ist, die Domänen das polymere schlagfestmachende Additiv enthalten und die kontinuierliche Phase den erneuerbaren Polyester enthält, wobei das mittlere prozentuale Volumen der Zusammensetzung, das von den Hohlräumen eingenommen wird, von 20 % bis 80 % pro Kubikzentimeter und vorzugsweise von 40 % bis 60 % pro Kubikzentimeter beträgt;
   wobei die Wasserdampfdurchlässigkeitsrate gemäß dem INDA-Testverfahren IST-70.4-99 bestimmt ist.

2. Atmungsaktive Folie nach Anspruch 1, wobei die thermoplastische Zusammensetzung frei von anorganischen Füllmittelpartikeln ist.

3. Atmungsaktive Folie nach Anspruch 1 oder 2, wobei das Aspektverhältnis der Hohlräume von 0,1 bis 1 beträgt und wobei die Hohlräume vorzugsweise eine Längsabmessung von 2 Mikrometer oder weniger und eine Querabmessung von 2 Mikrometer bis 5 Mikrometer aufweisen.

4. Atmungsaktive Folie nach einem der vorhergehenden Ansprüche, wobei die thermoplastische Zusammensetzung eine Dichte von 1,4 Gramm pro Kubikzentimeter oder weniger aufweist.

5. Atmungsaktive Folie nach einem der vorhergehenden Ansprüche, wobei der erneuerbare Polyester eine Polymilchsäure oder ein Polyethylenterephthalat ist.

6. Atmungsaktive Folie nach einem der vorhergehenden Ansprüche, wobei das Verhältnis des Löslichkeitsparameters für den erneuerbaren Polyester zum Löslichkeitsparameter des polymeren schlagfestmachenden Additivs von 0,5 bis 1,5 beträgt, das Verhältnis der Schmelzflussrate für den erneuerbaren Polyester zur Schmelzflussrate des polymeren schlagfestmachenden Additivs von 0,2 bis 8 beträgt und das Verhältnis des Youngschen Moduls des erneuerbaren Polyesters zum Youngschem Modul des polymeren schlagfestmachenden Additivs von 2 bis 500 beträgt.

7. Atmungsaktive Folie nach einem der vorhergehenden Ansprüche, wobei das polymere schlagfestmachende Additiv ein Propylen-Homopolymer, Propylen/$\alpha$-Olefin-Copolymer, Ethylen/$\alpha$-Olefin-Copolymer oder eine Kombination davon einschließt.

8. Atmungsaktive Folie nach einem der vorhergehenden Ansprüche, wobei der Interphasenmodifizierer vorzugsweise eine kinematische Viskosität von 0,7 bis 200 Centistoke, bestimmt bei einer Temperatur von 40 °C, aufweist.

9. Atmungsaktive Folie nach einem der vorhergehenden Ansprüche, wobei der Interphasenmodifizierer hydrophob ist.

10. Atmungsaktive Folie nach einem der vorhergehenden Ansprüche, wobei das polymere schlagfestmachende Additiv von 1 Gew.-% bis 30 Gew.-%, bezogen auf das Gewicht des erneuerbaren Polyesters, darstellt und der Interphasenmodifizierer von 0,1 Gew.-% bis 20 Gew.-%, bezogen auf das Gewicht des erneuerbaren Polyesters, darstellt.

**11.** Atmungsaktive Folie nach einem der vorhergehenden Ansprüche, wobei der Polyepoxid-Verträglichmacher eine epoxyfunktionale monomere (Meth)Acrylkomponente einschließt.

**12.** Atmungsaktive Folie nach einem der vorhergehenden Ansprüche, wobei der erneuerbare Polyester 70 Gew.-% oder mehr der thermoplastischen Zusammensetzung darstellt.

**13.** Folie nach einem der vorhergehenden Ansprüche, wobei es sich bei der Folie um eine mehrschichtige Folie handelt, die eine Trägerschicht und wenigstens eine zusätzliche Schicht enthält, wobei die Trägerschicht die thermoplastische Zusammensetzung enthält.

**14.** Absorbierender Artikel, umfassend die Folie nach einem der vorhergehenden Ansprüche; wobei der Artikel vorzugsweise weiterhin einen absorbierenden Kern umfasst, der zwischen der im Allgemeinen flüssigkeitsundurchlässigen Folie und einer flüssigkeitsdurchlässigen Schicht angeordnet ist; wobei die Folie vorzugsweise mit einem Vliesstoffmaterial verbunden ist.

**15.** Verfahren zur Bildung einer atmungsaktiven Folie, wobei das Verfahren umfasst:
das Bilden eines Blends, das Folgendes enthält:

einen starren erneuerbaren Polyester, wie Polymilchsäure;
ein polymeres schlagfestmachendes Additiv, das ein Polyolefin einschließt;
wenigstens einen Interphasenmodifizierer, wobei es sich beim Interphasenmodifizierer um ein Silikon, ein Silikon-Polyether-Copolymer, einen aliphatischen Polyester, aromatischen Polyester, ein Alkylenglycol, Alkandiol, Aminoxid, einen Fettsäureester oder eine Kombination davon handelt; und
wenigstens einen Polyepoxid-Verträglichmacher, der durchschnittlich wenigstens zwei Oxiranringe pro Molekül enthält;
wobei der starre erneuerbare Polyester eine Glasübergangstemperatur von 0 °C oder mehr aufweist;
das Extrudieren des Blends auf eine Fläche, wodurch ein Vorstufenfolienmaterial gebildet wird; und
das Strecken des Vorstufenfolienmaterials bei einer Temperatur, die niedriger als die Glasübergangstemperatur des erneuerbaren Polyesters ist, und vorzugsweise bei einer Temperatur, die um wenigstens 10 °C unter der Glasübergangstemperatur des erneuerbaren Polyesters liegt, wodurch eine atmungsaktive Folie gebildet wird, die eine Mehrzahl von Hohlräumen enthält.

## Revendications

**1.** Film respirant présentant un débit de transmission de vapeur d'eau de 500 g/m$^2$/24 heures ou plus, et de préférence de 2000 g/m$^2$/24 heures ou plus, le film comprenant une composition thermoplastique qui comprend :

au moins un polyester renouvelable rigide présentant une température de transition vitreuse de 0 °C ou plus, et de préférence de 50 °C à 75 °C ;
au moins additif de renforcement polymère qui comprend une polyoléfine ;
au moins un modificateur d'interphase, le modificateur d'interphase étant une silicone, un copolymère de silicone-polyéther, un polyester aliphatique, un polyester aromatique, un alkylène glycol, un alcane diol, un oxyde d'amine, un ester d'acide gras ou une combinaison de ceux-ci ; et
au moins un agent de compatibilisation polyépoxyde contenant, en moyenne, au moins deux cycles oxirane par molécule ;
la composition thermoplastique présentant une morphologie dans laquelle une pluralité de domaines primaires discrets et vides sont dispersés dans une phase continue, les domaines contenant l'additif de renforcement polymère et la phase continue contenant le polyester renouvelable,
le pourcentage volumique moyen de la composition occupé par les vides étant de 20 % à 80 % par centimètre cube, et de préférence de 40 % à 60 % par centimètre cube ;
le débit de transmission de vapeur d'eau étant déterminé selon la méthode d'essai INDA IST-70.4-99.

**2.** Film respirant de la revendication 1, dans lequel la composition thermoplastique est dépourvue de particules de charge inorganiques.

**3.** Film respirant de la revendication 1 ou 2, dans lequel le facteur de forme des vides est de 0,1 à 1 ; et de préférence dans lequel les vides présentent une dimension longitudinale de 2 micromètres ou moins et une dimension transversale de 2 micromètres à 5 micromètres.

**4.** Film respirant de l'une quelconque des revendications précédentes, dans lequel la composition thermoplastique présente une masse volumique de 1,4 gramme par centimètre cube ou moins.

**5.** Film respirant de l'une quelconque des revendications précédentes, dans lequel le polyester renouvelable est un polyacide lactique ou un polytéréphtalate d'éthylène.

**6.** Film respirant de l'une quelconque des revendications précédentes, dans lequel le rapport entre le paramètre de solubilité pour le polyester renouvelable et le paramètre de solubilité de l'additif de renforcement polymère est de 0,5 à 1,5, le rapport entre l'indice de fluidité à chaud pour le polyester renouvelable et l'indice de fluidité à chaud de l'additif de renforcement polymère est de 0,2 à 8, et le rapport entre le module d'élasticité de Young du polyester renouvelable et le module d'élasticité de Young de l'additif de renforcement polymère est de 2 à 500.

**7.** Film respirant de l'une quelconque des revendications précédentes, dans lequel l'additif de renforcement polymère comprend un homopolymère de propylène, un copolymère propylène/$\alpha$-oléfine, un copolymère éthylène/$\alpha$-oléfine ou une combinaison de ceux-ci.

**8.** Film respirant de l'une quelconque des revendications précédentes, dans lequel le modificateur d'interphase présente de préférence une viscosité cinématique de 0,7 à 200 centistokes, déterminée à une température de 40 °C.

**9.** Film respirant de l'une quelconque des revendications précédentes, dans lequel le modificateur d'interphase et hydrophobe.

**10.** Film respirant de l'une quelconque des revendications précédentes, dans lequel l'additif de renforcement polymère constitue 1 % en poids à 30 % en poids sur la base du poids du polyester renouvelable et le modificateur d'interphase constitue 0,1 % en poids à 20 % en poids sur la base du poids du polyester renouvelable.

**11.** Film respirant de l'une quelconque des revendications précédentes, dans lequel l'agent de compatibilisation polyépoxyde comprend un composant monomère (méth)acrylique à fonction époxy.

**12.** Film respirant de l'une quelconque des revendications précédentes, dans lequel le polyester renouvelable constitue 70 % en poids ou plus de la composition thermoplastique.

**13.** Film de l'une quelconque des revendications précédentes, dans lequel le film est un film multicouche qui contient une couche de base et au moins une couche supplémentaire, la couche de base contenant la composition thermoplastique.

**14.** Article absorbant comprenant le film de l'une quelconque des revendications précédentes ; l'article comprenant en outre de préférence une âme absorbante positionnée entre le film généralement imperméable aux liquides et une couche perméable aux liquides ; le film étant de préférence joint à un matériau de bande non tissée.

**15.** Procédé de formation d'un film respirant, le procédé comprenant :
la formation d'un mélange qui contient :

un polyester renouvelable rigide, tel qu'un polyacide lactique ;
un additif de renforcement polymère qui comprend une polyoléfine ;
au moins un modificateur d'interphase, le modificateur d'interphase étant une silicone, un copolymère de silicone-polyéther, un polyester aliphatique, un polyester aromatique, un alkylène glycol, un alcane diol, un oxyde d'amine, un ester d'acide gras ou une combinaison de ceux-ci ; et
au moins un agent de compatibilisation polyépoxyde contenant, en moyenne, au moins deux cycles oxirane par molécule ;
le polyester renouvelable rigide présentant une température de transition vitreuse de 0 °C ou plus ;
l'extrusion du mélange sur une surface pour former un matériau de film précurseur ; et
l'étirage du matériau de film précurseur à une température qui est inférieure à la température de transition vitreuse du polyester renouvelable, et de préférence à une température qui est inférieure d'au moins 10 °C à la température de transition vitreuse du polyester renouvelable, pour former un film respirant qui contient une pluralité de vides.

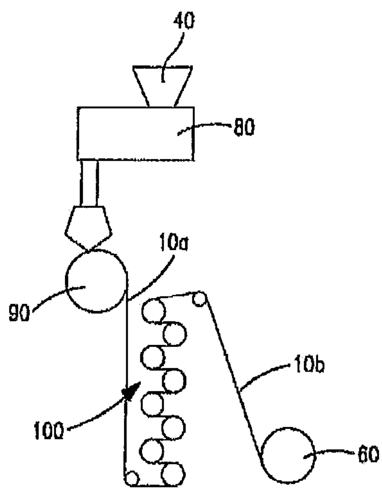


FIG. 1

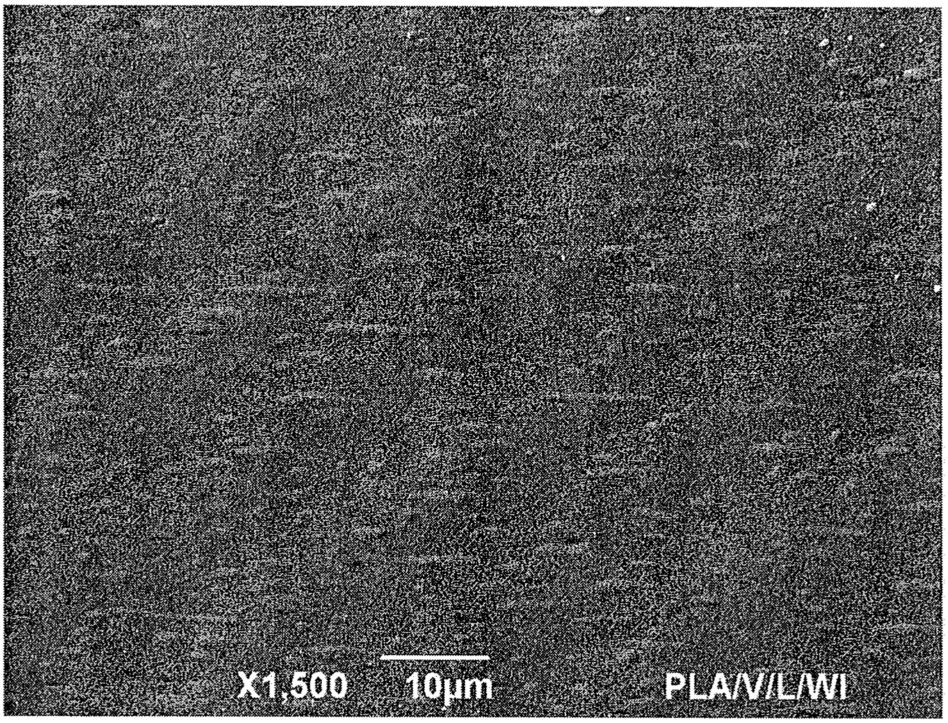


Fig. 2

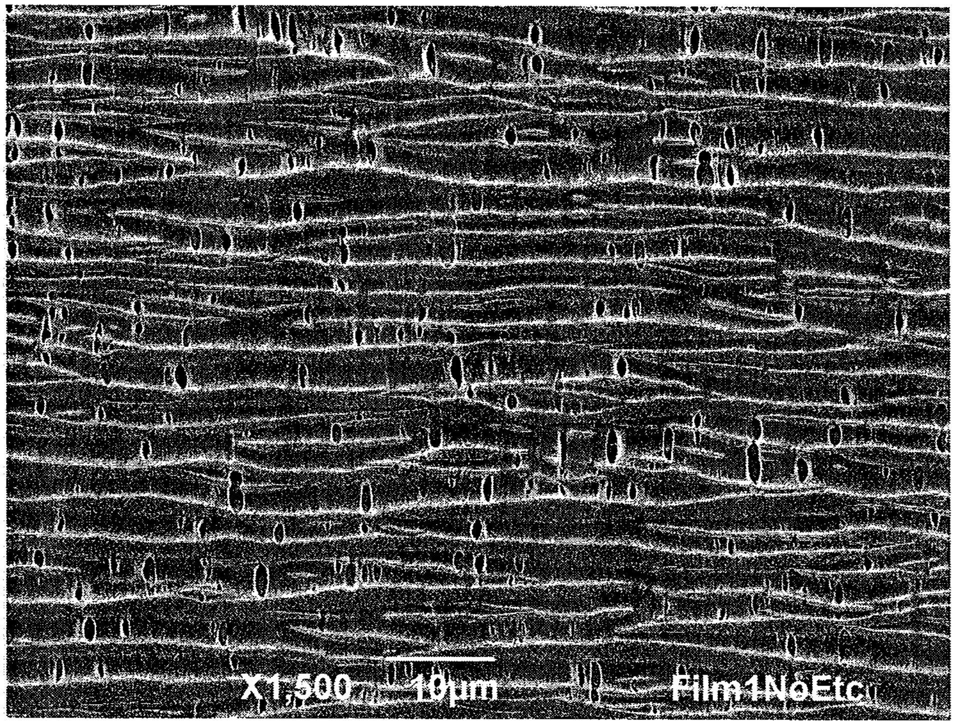


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2005122363 A
- WO 2002085969 A
- US 2011152815 A
- US 2003162013 A
- US 2010068484 A
- JP 2010280921 A
- JP 2007320239 A
- US 4797468 A
- US 5470944 A
- US 5770682 A
- US 5821327 A
- US 5880254 A
- US 6326458 B
- US 4937299 A, Ewen
- US 5218071 A, Tsutsui
- US 5272236 A, Lai
- US 5278272 A, Lai
- US 6500563 B, Datta
- US 5539056 A, Yang
- US 5596052 A, Resconi
- US 5571619 A, McAlpin
- US 5322728 A, Davis
- US 5472775 A, Obijeski
- US 6090325 A, Wheat
- US 5179164 A
- US 3354506 A, Ralev
- US 3650649 A, Schippers
- US 3801429 A, Schrenk
- US 20050245162 A, McCormack
- US 20030068951 A, Boggs
- US 6716203 B, Sorebo
- US 6380445 B, Moder
- US 20030116462 A, Sorebo
- US 5649916 A, DiPalma
- US 6110158 A, Kielpikowski
- US 6663611 B, Blanev
- US 20040060112 A1, Fell
- US 4886512 A, Damico
- US 5558659 A, Sherrod
- US 6888044 B, Fell
- US 6511465 B, Freiburger
- US 4801494 A, Datta
- US 4908026 A, Sukiennik
- US 4798603 A, Meyer
- US 5248309 A, Serbiak